# EUROPEAN PATENT APPLICATION

(11) **EP 4 648 221 A1**
(43) Date of publication of application: **12.11.2025**
(21) Application number: 24753671.7
(22) Date of filing: 08.02.2024
(51) Int. Cl.: H01Q 1/27, H01Q 1/38, G02C 11/00

(54) **WEARABLE ELECTRONIC DEVICE COMPRISING ANTENNA**

(30) Priority: 08.02.2023 KR 20230016738; 03.03.2023 KR 20230028470
(71) Applicant: Samsung Electronics Co., Ltd., Suwon-si, Gyeonggi-do 16677 (KR)
(72) Inventor: NAM, Hojung, Suwon-si, Gyeonggi-do 16677 (KR); KIM, Seunghwan, Suwon-si, Gyeonggi-do 16677 (KR); CHUN, Jaebong, Suwon-si, Gyeonggi-do 16677 (KR); HWANG, Soonho, Suwon-si, Gyeonggi-do 16677 (KR)
(74) Representative: Gulde & Partner
(86) International application number: PCT/KR2024/001925
(87) International publication number: WO 2024/167350

(57) **Abstract**

Provided according to an example embodiment of the disclosure is a wearable electronic device comprising: a frame which is mounted on a user's head; a transparent display which is arranged in the frame to face the user's eyes when the frame is mounted on the user's head; a first conductive pattern at least a part of which is disposed in the frame or the transparent display; and a circuit assembly which is attached to/detached from the frame, wherein, when the circuit assembly is attached to the frame, the first conductive pattern is electrically connected to a wireless communication circuit included in the circuit assembly.

## Description

### [Technical Field]

The disclosure relates to a wearable electronic device including antennas.

### [Background Art]

Wearable electronic devices may include antennas.

The foregoing description may be provided as related art solely for the purpose of aiding the understanding of the disclosure. No claim or determination is made as to whether any of the above is applicable as prior art related to the disclosure.

### [Disclosure of Invention]

### [Technical Problem]

In a state where a wearable electronic device is worn, the antenna radiation performance may deteriorate due to the electromagnetic influence caused by the user's body (e.g., dielectric). In a state where a wearable electronic device is worn, the electromagnetic waves radiated from the antenna included in the wearable electronic device may affect the user (for example, the electromagnetic waves may be absorbed by the user's body).

In a usage environment where a communication function through an antenna is unnecessary, the weight of the wireless communication circuit included in the wearable electronic device and various electrical elements related thereto may cause discomfort to the user who is wearing the wearable electronic device.

Various embodiments of the disclosure provide a wearable electronic device including an antenna (or antenna radiator) capable of improving the antenna radiation performance and reducing a specific absorption rate (SAR).

Various embodiments of the disclosure provide a wearable electronic device including an antenna in which a combination of a wireless communication circuit and at least one electrical element related thereto is attachable and detachable depending on the usage environment.

The technical problems to be solved in the disclosure are not limited to the technical problems mentioned above, and other technical problems not mentioned will be understood by those skilled in the art to which the disclosure pertains from the description below.

### [Solution to Problem]

According to an example embodiment of the disclosure, there is provided a wearable electronic device, and the wearable electronic device includes a frame, a transparent display, a first conductive pattern, and a circuit assembly. The frame is mounted on the user's head. The transparent display is disposed on the frame so as to face the user's eyes when the frame is mounted on the user's head. The first conductive pattern is disposed at least partially on the frame or the transparent display. The circuit assembly is attachable to and detachable from the frame. In a case where the circuit assembly is attached to the frame, the first conductive pattern is electrically connected to a wireless communication circuit included in the circuit assembly.

### [Advantageous Effects of Invention]

The wearable electronic device including the antenna according to the example embodiments of the disclosure may secure a separation distance between the user's body and the antenna radiator in a state where the wearable electronic device is worn, thereby reducing the SAR and improving antenna radiation performance.

The wearable electronic device including the antenna according to the example embodiments of the disclosure is capable of attachment and detachment of a combination of a wireless communication circuit and at least one electrical element related thereto depending on a usage environment, thereby improving usability.

In addition, the effects that may be obtained or expected from various embodiments of the disclosure will be directly or implicitly disclosed in the detailed description of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a block diagram of an electronic device in a network environment according to an embodiment of the disclosure.
FIG. 2 and 3 are perspective views of a first example wearable electronic device according to an embodiment of the disclosure.
FIG. 4 is perspective views of the second, third, fourth, fifth, and sixth example wearable electronic devices according to various embodiments of the disclosure.
FIG. 5 is a perspective view of a seventh example wearable electronic device according to an embodiment of the disclosure.
FIG. 6 is a diagram illustrating a seventh example wearable electronic device according to an embodiment of the disclosure.
FIG. 7 is a perspective view illustrating a state where a circuit assembly is separated from the seventh example wearable electronic device according to an embodiment of the disclosure.
FIG. 8 is a perspective view of an eighth example wearable electronic device according to an embodiment of the disclosure.
FIG. 9 is a perspective view of a male connector and a female connector according to various embodiments of the disclosure.
FIG. 10 is a perspective view of a ninth example wearable electronic device according to an embodiment of the disclosure.
FIG. 11 is a cross-sectional view of the ninth example wearable electronic device taken along line A-A' in FIG. 10 according to an embodiment of the disclosure.
FIG. 12 is a cross-sectional view of the ninth example wearable electronic device in which a circuit assembly is separated according to an embodiment of the disclosure.
FIG. 13 is a diagram of a tenth example wearable electronic device according to an embodiment of the disclosure.
FIG. 14 is a diagram of the tenth example wearable electronic device according to an embodiment of the disclosure.
FIG. 15 is a diagram illustrating wearing states of several example wearable electronic devices according to various embodiments of the disclosure.
FIG. 16 is a diagram illustrating heat maps representing SARs in wearing states of several example wearable electronic devices according to various embodiments of the disclosure.
FIG. 17 is a diagram illustrating graphs representing radiation patterns in wearing states of several example wearable electronic devices and graphs representing radiation patterns in non-wearing states of several example wearable electronic devices according to various embodiments of the disclosure.
FIG. 18 is a diagram illustrating graphs representing antenna radiation performances for a first conductive pattern of a first type of wearable electronic device and graphs representing resonance characteristics for a second conductive pattern of a second type of wearable electronic device according to various embodiments of the disclosure.
FIG. 19 is a diagram illustrating heat maps representing SARs in a wearing state of a second type of wearable electronic device according to various embodiments of the disclosure.
FIG. 20 is a diagram illustrating perspective views of various example wearable electronic devices, and graphs representing radiation patterns and heat maps representing SARs in wearing states of various example wearable electronic devices according to various embodiments of the disclosure.
FIG. 21 illustrates graphs illustrating resonance characteristics of the first example wearable electronic device and the third example wearable electronic device according to various embodiments of the disclosure.
FIG. 22 is a diagram illustrating a perspective view of the first example wearable electronic device, a perspective view of the fifth example wearable electronic device, and graphs representing radiation characteristics of the first example wearable electronic device and the fifth example wearable electronic device and heat maps representing SARs in wearing states according to various embodiments of the disclosure.
FIG. 23 is a diagram illustrating graphs representing antenna radiation performances and graphs representing resonance characteristics for the first example wearable electronic device and the fifth example wearable electronic device according to various embodiments of the disclosure.
FIG. 24 is a diagram illustrating a cross-sectional view of a transparent display, and graphs representing antenna radiation performances and graphs representing resonance characteristics for an antenna radiator disposed or included in the transparent display according to various embodiments of the disclosure.

### [Mode for the Invention]

Hereinafter, various example embodiments of the disclosure disclosed herein will be described in greater detail with reference to the accompanying drawings.

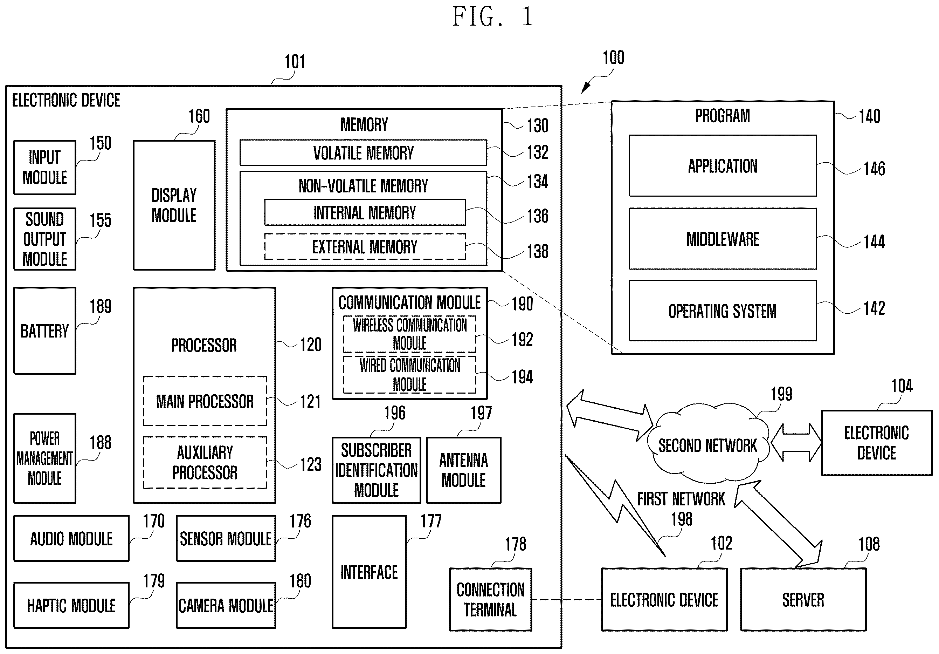

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

Hereinafter, various example wearable electronic devices will be described with reference to the attached drawings. Any example wearable electronic device may be obtained by changing or modifying at least some of a plurality of components of another example wearable electronic device, and may be interpreted as being included within the scope of various embodiments of the disclosure. In regard to the description of any example wearable electronic device, the same terminology and/or the same reference numeral may be used for the component that is at least partially identical or similar to or related to the component of another example wearable electronic device. Two components that have the same terminology but different reference numerals among any two example wearable electronic devices may be understood as being substantially the same or as having changed or modified forms.

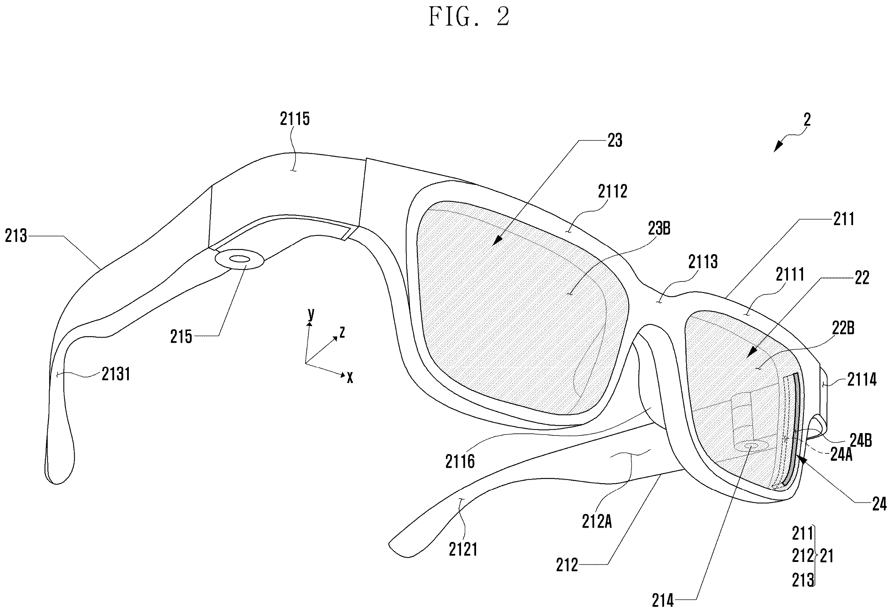

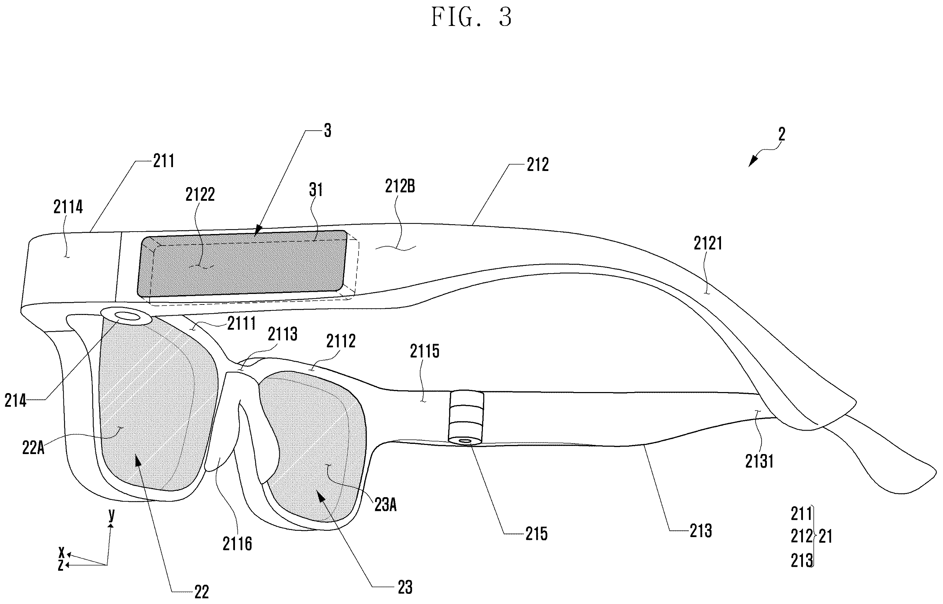

FIGS 2 and 3 are perspective views of a first example wearable electronic device 2 according to an embodiment of the disclosure.

Referring to FIGS. 2 and 3, the first example wearable electronic device 2 may include at least one of the plurality of components of the electronic device 101 in FIG. 1, or may include one or more other components.

According to an embodiment, the first example wearable electronic device 2 may be worn on the user's head. Hereinafter, a state in which the first example wearable electronic device 2 is worn on the user's head will be referred to as a "wearing state" of the first example wearable electronic device 2.

According to an embodiment, the first example wearable electronic device 2 may be implemented to have a wearing comfort capable of reducing discomfort perceived by the user in the wearing state. For example, the first example wearable electronic device 2 may be implemented to reduce discomfort perceived by the user due to a load (or weight) that is lopsided to one side in the wearing state.

According to an embodiment, the first example wearable electronic device 2 may be implemented in the form of eyeglasses. For example, the first example wearable electronic device 2 may be smart glasses including a vision function and a computer.

According to an embodiment, the first example wearable electronic device 2 may include a frame (or frame structure, framework, housing, or housing structure) 21, a first transparent display (or first transparent screen) 22, a second transparent display (or second transparent screen) 23, a first conductive pattern (or metal pattern) 24, and/or a circuit assembly 3.

According to an embodiment, the frame 21 may be a structural component for disposing and/or supporting electrical components (or functional components) such as the first transparent display 22 and the second transparent display 23. The frame 21 may be provided (or formed) in a form capable of being stably placed on a user's head. The frame 21 may be supported by a plurality of parts of the user's head in the wearing state of the first example wearable electronic device 2.

According to an embodiment, in the wearing state of the first example wearable electronic device 2, the first transparent display 22 disposed in the frame 21 may be positioned in front of the user's left eye, and the second transparent display 23 disposed in the frame 21 may be positioned in front of the user's right eye.

According to an embodiment, the frame 21 may include a first frame 211, a second frame 212, a third frame 213, a first hinge 214, and/or a second hinge 215.

According to an embodiment, the first frame 211 may be combined with the first transparent display 22 and the second transparent display 23. The relative position between the first transparent display 22 and the second transparent display 23 may be supported and maintained (or fixed) by the first frame 211.

According to an embodiment, the first frame 211 may include a first rim (or first bezel) 2111, a second rim (or second bezel) 2112, a bridge 2113, a first end piece 2114, a second end piece 2115, and/or a nose pad 2116.

According to an embodiment, the first rim 2111 may extend along at least a portion of a first edge of the first transparent display 22 and may be combined with the first edge. The first rim 2111, as disclosed in the illustrated example, may extend along the entire first edge of the first transparent display 22 to surround the entire first edge.

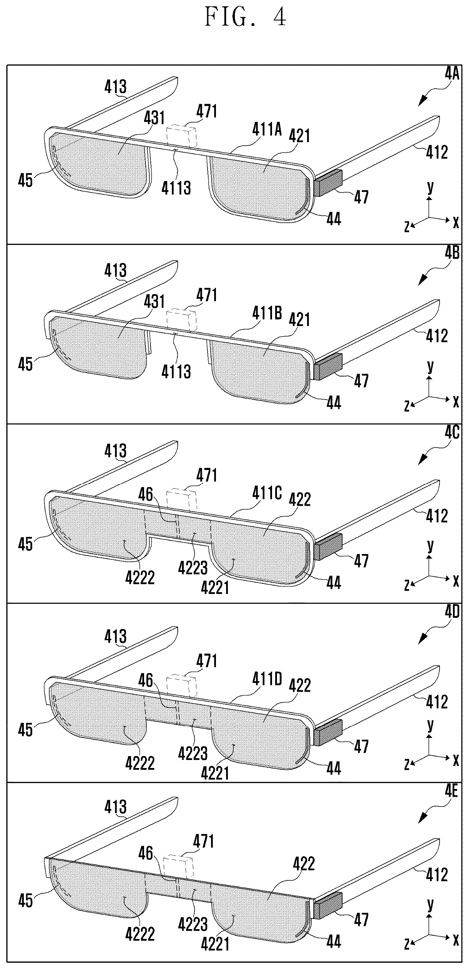

According to various embodiments, the first rim 2111 may be provided (or formed) in a form corresponding to a portion of the first edge of the first transparent display 22 (e.g., the first frame 411B in FIG. 4).

According to an embodiment, the second rim 2112 may extend along at least a portion of a second edge of the second transparent display 23 and may be combined with the second edge. The second rim 2112 corresponding to the second transparent display 23 may be provided (or formed) to be at least partially identical or similar to the first rim 2111 corresponding to the first transparent display 22.

According to an embodiment, the bridge 2113 may connect the first rim 2111 and the second rim 2112.

According to an embodiment, the first end piece 2114 may be positioned on one side of the first frame 211 for connection with the second frame 212. The first end piece 2114 may extend from the first rim 2111, or may be connected to the first rim 2111. The first end piece 2114 may be connected to the second frame 212 via the first hinge 214. The second end piece 2115 may be positioned on the other side of the first frame 211 for connection with the third frame 213. The second end piece 2115 may extend from the second rim 2112, or may be connected to the second rim 2112. The second end piece 2115 may be connected to the third frame 213 via the second hinge 215.

According to an embodiment, the first end piece 2114 may be connected to the first rim 2111 via a mechanical connection such as a screw connection. The second end piece 2115 may be connected to the second rim 2112 via a mechanical connection such as a screw connection.

According to an embodiment, the nose pad 2116 may be placed on the user's nose in the wearing state of the first example wearable electronic device 2.

According to an embodiment, an integrated or single structure (e.g., a single continuous structure or a complete structure) including the first rim 2111, the second rim 2112, the bridge 2113, the first end piece 2114, and/or the second end piece 2115 may be provided (or formed). In various embodiments, the nose pad 2116 may be connected to the integrated or single structure via a mechanical connection such as a screw connection. In various embodiments, the integrated or single structure may further include a nose pad 2116.

According to an embodiment, the second frame 212 may be connected to one side (e.g., the first end piece 2114) of the first frame 211. For example, the second frame 212 may be a first temple adapted to rest on the user's left ear in the wearing state of the first example wearable electronic device 2. The third frame 213 may be connected to the other side (e.g., the second end piece 2115) of the first frame 211. For example, the third frame 213 may be a second temple adapted to rest on the user's right ear in the wearing state of the first example wearable electronic device 2.

According to an embodiment, a first end 2121 of the second frame 212 (e.g., the first temple), which rests on the left ear in the wearing state of the first example wearable electronic device 2, may be provided (or formed) in a form that is bent behind the left ear, thereby reducing the separation of the frame 21 from the user's head. A second end 2131 of the third frames 213 (e.g., the second temple), which rests on the right ear in the wearing state of the first example wearable electronic device 2, may be provided (or formed) in a form that is bent behind the right ear, thereby reducing the separation of the frame 21 from the user's head.

According to an embodiment, the second frame 212 may be connected to the first frame 211 via the first hinge 214. The third frame 213 may be connected to the first frame 211 via the second hinge 215. The frame 21 capable of being folded via the first hinge 214 and the second hinge 215 may facilitate storage and/or carrying of the first example wearable electronic device 2 in a non-wearing state.

According to an embodiment, the nose pad 2114 of the first frame 211, the first end 2121 of the second frame (e.g., the first temple) 212, and the second end 2131 of the third frame (e.g., the second temple) 213 may be supported by different parts of the user's head, so that the first example wearable electronic device 2 may be stably worn on the user's head.

According to various embodiments, the first example wearable electronic device 2 or frame 21 may be implemented in various other forms (not shown separately) capable of being stably worn on the user's head while positioning the first transparent display 22 and the second transparent display 23 in front of the eyes.

According to an embodiment, the first frame 211, the second frame 212, and/or the third frame 213 may include a non-metal material and/or a metal material.

According to an embodiment, the first transparent display 22 may be configured in the form of a plate including a first surface 22A and a second surface 22B facing in a direction opposite to the first surface 22A. The first surface 22A and the second surface 22B of the first transparent display 22 are not covered by the first frame 211, and thus may be substantially exposed to the outside of the first example wearable electronic device 2. The second transparent display 23 may be in the form of a plate including a third surface 23A and a fourth surface 23B facing in a direction opposite to the third surface 23A. The third surface 23A and the fourth surface 23B of the second transparent display 23 are not covered by the first frame 211, and thus may be substantially exposed to the outside of the first example wearable electronic device 2. In the wearing state of the first example wearable electronic device 2, the first surface 22A of the first transparent display 22 may face the user's left eye, and the third surface 23A of the second transparent display 23 may face the user's right eye.

According to various embodiments, an integrated or single transparent display (or a single continuous transparent display or a complete transparent display) (e.g., the transparent display 422 in FIG. 4) may be implemented in place of the first transparent display 22 and the second transparent display 23. The integrated or single transparent display may include, for example, a first part (e.g., the first part 4221 in FIG. 4) positioned in front of the left eye, a second part (e.g., the second part 4222 in FIG. 4) positioned in front of the right eye, and a third part (e.g., the third part 4223 in FIG. 4) connecting the first part and the second part. The first frame 21 may be transformed into a form (not shown separately) corresponding to the integrated or single transparent display (e.g., see the first frame 411C or 411D in FIG. 4).

According to an embodiment, in the wearing state of the first example wearable electronic device 2, the scene (e.g., an actual image) in front of the eyes may be visible to the user by passing through the first transparent display 22 and the second transparent display 23.

According to various embodiments, the first example wearable electronic device 2 may include a first lens (e.g., an eyeglass lens or a corrective lens) (not shown separately) positioned between the first transparent display 22 and the left eye, and a second lens (not shown separately) positioned between the second transparent display 23 and the right eye. For example, the first lens and the second lens may be attachable to and detachable from the frame 21. For example, the first lens may be manufactured based on the vision of the user's left eye, and the second lens may be manufactured based on the vision of the user's right eye.

According to various embodiments, the first transparent display 22 and/or the second transparent display 23 may be provided in a form having the function of a lens or including a lens.

According to an embodiment, the first example wearable electronic device 2 may be configured to provide augmented reality (AR) while the first example wearable electronic device 2 is being worn. Augmented reality may be defined or interpreted as blending digital objects and the physical world. Augmented reality may be defined or interpreted as adding visual information to what the user actually sees, or as providing visual information together with what the user sees. Augmented reality may provide various image information by superimposing virtual images onto real spaces or objects.

According to an embodiment, in augmented reality, a virtual image may be displayed through the first transparent display 22 and/or the second transparent display 23, and the virtual image may be superimposed onto the scene (e.g., an actual image) in front of the user so as to be visible to the user. Depending on the type of the first transparent display 22 and/or the second transparent display 23, the operation for implementing augmented reality (e.g., superimposing information onto a field of view) may vary.

According to an embodiment, the first transparent display 22 may be a projection-type transparent display. The first example wearable electronic device 2 may include a light source (not shown separately) that outputs image-related light. The light output from the light source may be reflected (e.g., total internal reflection (TIR)) by one surface (or reflective surface) (e.g., the first surface 22A) of the first transparent display 22 and may enter the user's left eye. The virtual image may be displayed through the first transparent display 22, and the virtual image may be superimposed onto the scene (e.g., an actual image) in front of the left eye to be visible to the user. The second transparent display 23 may be implemented in a manner substantially identical to or similar to the first transparent display 22.

According to an embodiment, the first example wearable electronic device 2 may include a first light source (e.g., a first projector) (not shown separately) and/or a second light source (e.g., a second projector) (not shown separately) disposed in the frame 21. The image-related light output from the first light source may be displayed as a virtual image through the first transparent display 22, and the virtual image may be superimposed onto the scene (e.g., an actual image) in front of the left eye so as to be visible to the user. The image-related light output from the second light source may be displayed as a virtual image through the second transparent display 23, and the virtual image may be superimposed onto the scene (e.g., an actual image) in front of the right eye so as to be visible to the user.

According to various embodiments, the first transparent display 22 and/or the second transparent display 23 may be implemented as an optical screen that allows the image projected from the light source to be clearly visible even in a bright environment.

According to various embodiments, the first transparent display 22 may be implemented as an optical waveguide that transmits light output from a light source (not shown separately) included in the first example wearable electronic device 2 to the user's left eye. The first transparent display 22 may include, for example, a glass plate or a plastic plate (or a polymer plate) having a nano-pattern (e.g., a grating structure in a polygonal or curved shape) disposed (or formed) on its interior or surface (e.g., the first surface 22A or the second surface 22B). The second transparent display 23 may be implemented in a manner substantially the same as or similar to the first transparent display 22.

According to various embodiments, the first transparent display 22 and/or the second transparent display 23 may be a see-through type of transparent display including a plurality of pixels. The see-through type of transparent display may have various types of displays such as a transparent organic light-emitting diode (OLED) display, a transparent micro LED, and a transparent liquid crystal display (LCD).

According to an embodiment, the see-through type of transparent display may include a transparent thin-film electro-luminescence (TEEL). For example, the transparent TEEL may include a transparent electrode, a transparent inorganic phosphor, and a transparent insulating film disposed between the transparent electrode and the transparent inorganic phosphor. The transparent TEEL may be configured such that electrons pass through the transparent inorganic phosphor to emit light.

According to an embodiment, the see-through type of transparent display may be implemented through a device such as an electroluminescent display (ELD), an electrochromic device, or an electrowetting device.

The see-through type of transparent display may be implemented in various other ways in addition to the above.

According to various embodiments, the first transparent display 22 and/or the second transparent display 23 may be a transparent near-eye display (NED).

According to various embodiments, the first transparent display 22 and/or the second transparent display 23 may be provided or implemented in various forms capable of displaying or including an augmented reality overlay (AR overlay).

According to various embodiments, the first transparent display 22 and/or the second transparent display 23 may be implemented to change optical properties (e.g., tint) during runtime.

According to various embodiments, the first example wearable electronic device 2 may be implemented in a form that projects an image directly onto the retina. For example, by replacing (or omitting) the first transparent display 22, the first example wearable electronic device 2 may include a first projector (or a first light source) (not shown separately) for directly projecting light onto the retina of the left eye. For example, by replacing (or omitting) the second transparent display 23, the first example wearable electronic device 2 may include a second projector (or a second light source) (not shown separately) for directly projecting light onto the retina of the right eye.

According to various embodiments, the first example wearable electronic device 2 may be configured to provide virtual reality (VR) in its wearing state.

According to various embodiments, the first example wearable electronic device 2 may be configured to provide mixed reality (MR) (or hybrid reality) in its wearing state.

According to an embodiment, augmented reality, virtual reality, or mixed reality may be provided in the wearing state of the first example wearable electronic device 2, and the wearing state may be detected through at least one sensor module (e.g., the sensor module 176 in FIG. 1).

According to various embodiments, the first example wearable electronic device 2 may utilize not only visual information through the first transparent display 22 and/or the second transparent display 23, but also auditory information through an audio output module (e.g., the audio output module 155 in FIG. 1), or other types of information (e.g., tactile information or olfactory information) through other components for augmented reality, virtual reality, or mixed reality.

According to various embodiments, the first example wearable electronic device 2 may provide augmented reality, virtual reality, or mixed reality using data acquired through an input module (e.g., the input module 150 in FIG. 1), a sensor module (e.g., the sensor module 176 in FIG. 1), and/or a camera module (e.g., the camera module 180).

According to various embodiments, the first example wearable electronic device 2 may provide augmented reality, virtual reality, or mixed reality using data acquired through a communication module (e.g., the communication module 190).

According to various embodiments, the first example wearable electronic device 2 may provide augmented reality, virtual reality, or mixed reality using movement of the user's head detected through at least one sensor module (e.g., the sensor module 176 in FIG. 1) in its wearing state.

According to various embodiments, the first example wearable electronic device 2 may provide augmented reality, virtual reality, or mixed reality using the user's gaze detected (or tracked) by a gaze tracking module (or at least one sensor module) (not shown separately) in its wearing state. The gaze tracking module may include, for example, an electro-oculography or electrooculogram (EOG) sensor, a coil system, a dual Purkinje system, bright pupil systems, or dark pupil systems. The gaze tracking module may utilize, for example, at least one camera module (e.g., a micro camera module).

According to various embodiments, the first example wearable electronic device 2 may include a cover (not shown separately) that may be attachable to and detachable from the frame 21. When the first example wearable electronic device 2 with the cover attached (or coupled) thereto is worn on the user's head, the cover may block the user from seeing the scene in front of the eyes (e.g., an actual image). A combination of the cover and the frame 21 may be provided (or formed) to reduce or prevent the inflow of external light in the wearing state, thereby improving the clarity and/or immersion in the content displayed on the first transparent display 22 and the second transparent display 23. When augmented reality or mixed reality is performed while the cover is attached (or coupled) to the frame 21, the external environment captured through at least one camera module 180 may be configured to be displayed through the first transparent display 22 and/or the second transparent display 23.

According to an embodiment, at least a portion of the first conductive pattern 24 may be disposed or included in the first transparent display 22.

According to an embodiment, the first conductive pattern 24 may be electrically connected to a wireless communication circuit (e.g., the wireless communication module 192 in FIG. 1) to operate as an antenna radiator. The wireless communication circuit may provide (or feed) an electromagnetic signal (or a wireless signal, an RF signal, or a radiation current) to the first conductive pattern 24, and the first conductive pattern 24 may radiate an electromagnetic wave. The wireless communication circuit may be configured to transmit a signal in at least one selected or designated frequency band to the outside of the first example wearable electronic device 2 through the first conductive pattern 24. The wireless communication circuit may be configured to receive a signal in at least one selected or designated frequency band from the outside of the first example wearable electronic device 2 through the first conductive pattern 24.

According to an embodiment, at least a portion of the first conductive pattern 24 may be disposed (or positioned) in the opening of the first transparent display 22. For example, the opening of the first transparent display 22 may be a through-hole passing through the first surface 22A and the second surface 22B.

According to an embodiment, the first conductive pattern 24 may include a fifth surface 24A exposed to the outside in a direction in which the first surface 22A of the first transparent display 22 faces. The fifth surface 24A may be seamlessly connected to the first surface 22A without a substantial height difference from the first surface 22A.

According to various embodiments, although not separately illustrated, the fifth surface 24A of the first conductive pattern 24 and the first surface 22A of the first transparent display 22 may be provided (or formed) with different heights.

According to an embodiment, the first conductive pattern 24 may include a sixth surface 24B that is exposed to the outside in a direction in which the second surface 22B of the first transparent display 22 faces. The sixth surface 24B may be seamlessly connected to the second surface 22B without a substantial height difference from the second surface 22B.

According to various embodiments, although not shown separately, the sixth surface 24B of the first conductive pattern 24 and the second surface 22B of the first transparent display 22 may be provided (or formed) with different heights.

According to various embodiments, at least a portion of the first conductive pattern 24 may be disposed (or positioned) in a first recess (not shown separately) provided (or formed) in the first surface 22A of the first transparent display 22.

According to various embodiments, at least a portion of the first conductive pattern 24 may be disposed (or positioned) in a second recess (not shown separately) provided (or formed) in the second surface 22B of the first transparent display 22.

According to an embodiment, although not shown separately, at least a portion of the first conductive pattern 24 may be disposed (or positioned) inside the first transparent display 22. At least a portion of the first conductive pattern 24 may be disposed (or positioned) between the first surface 22A and the second surface 22B of the first transparent display 22.

According to various embodiments, although not shown separately, at least a portion of the first conductive pattern 24 may be disposed (or positioned) on the first surface 22A of the first transparent display 22.

According to various embodiments, although not shown separately, at least a portion of the first conductive pattern 24 may be disposed (or positioned) on the second surface 22B of the first transparent display 22.

Although not shown separately, there may be various combinations of the first transparent display 22 and the first conductive pattern 24 and relative positions between the first transparent display 22 and the conductive pattern 24 according to the combination above.

According to an embodiment, the first conductive pattern 24 may extend, at least in part, adjacent to and/or along the first edge of the first transparent display 22 so as to reduce visual discomfort to the user in the wearing state of the first example wearable electronic device 2.

According to various embodiments, the first rim 2111 may be provided (or formed) in a form (not shown separately) corresponding to a portion of the first edge of the first transparent display 22. At least a portion of the first conductive pattern 24 may be disposed (or positioned) on at least another portion of the first edge of the first transparent display 22. According to various embodiments, the first transparent display 22 may be disposed (or positioned) in a recess (not shown separately) or a notch (not shown separately) provided (or formed) in the first edge.

According to various embodiments, although not shown separately, at least a portion of the first conductive pattern 24 may be provided (or formed) to replace a portion of the first rim 2111. In various embodiments, the combination of at least a portion of the first conductive pattern 24 and the first rim 2111 may form (or provide) at least a portion of a bezel for the first transparent display 22.

According to various embodiments, the first conductive pattern 24 may be implemented to be embedded in the first transparent display 22. The first conductive pattern 24 may include, for example, a thin microelectrode embedded in the first transparent display 22.

According to an embodiment, the first conductive pattern 24 embedded in the first transparent display 22 may be implemented to allow light to pass therethrough. For example, the first conductive pattern 24 embedded in the first transparent display 22 may include an optically transparent antenna or antenna-on-display (AoD). The first conductive pattern 24 may include, for example, a grid cell. The first conductive pattern 24 may be optically transparent due to holes (or openings) of the grid cell.

According to an embodiment, the first conductive pattern 24 embedded in the first transparent display 22 may be formed of a transparent conductive oxide (TCO), graphene, silver nanowires (AgNWs), carbon nanotubes (CNTs), wire metal mesh (WMM), or a conductive film (TCF) such as an AgHT film, a multilayer film (MLF), or a micro metal mesh film (MMMC).

According to various embodiments, a plurality of conductive patterns (not shown separately) operating as antenna radiators may be implemented to be disposed or included in the first transparent display 22.

According to an embodiment, the first example wearable electronic device 2 may include a second conductive pattern (e.g., the second conductive pattern 45 in FIG. 4) disposed or included in the second transparent display 23. The second conductive pattern may be electrically connected to a wireless communication circuit (e.g., the wireless communication module 192 in FIG. 1) included in the first example wearable electronic device 2 to operate as an antenna radiator. The second conductive pattern may be disposed or included in the second transparent display 23 in a manner substantially identical or similar to at least one of the first conductive patterns 24.

According to various embodiments, a single transparent display (e.g., the transparent display 422 in FIG. 4) may be provided (or formed) in place of the first transparent display 22 and the second transparent display 23. The first example wearable electronic device 2 may include a third conductive pattern (e.g., the third conductive pattern 46 in FIG. 4) disposed or included in a third part (e.g., the third part 4223 in FIG. 4) connecting a first part (e.g., the first part 4221 in FIG. 4) of a single transparent display corresponding to the left eye and a second part (e.g., the second part 4222 in FIG. 4) thereof corresponding to the right eye. The third conductive pattern may be electrically connected to a wireless communication circuit (e.g., the wireless communication module 192 in FIG. 1) included in the first example wearable electronic device 2 to operate as an antenna radiator.

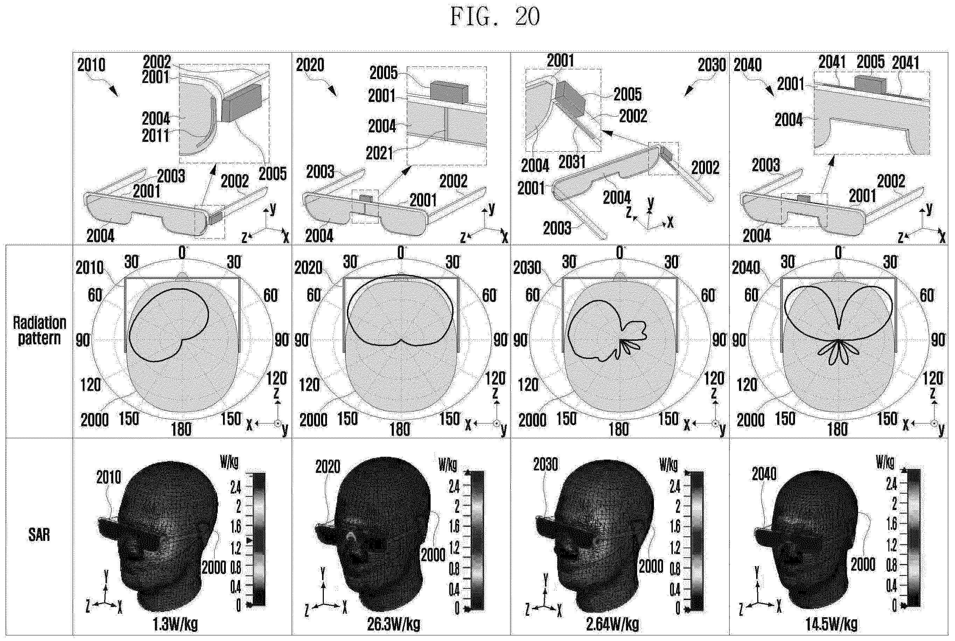

According to various embodiments, the first example wearable electronic device 2 may include at least one fourth conductive pattern (e.g., the fourth conductive pattern 2031 in FIG. 20) disposed or included in the second frame 212 or the third frame 213, or positioned inside the second frame 212 or the third frame 213. At least one fourth conductive pattern may include, for example, at least a portion of a conductive part included in the second frame 212 or the third frame 213, or may be disposed (or positioned) in a non-conductive part of the second frame 212 or the third frame 213. At least one fourth conductive pattern may be electrically connected to a wireless communication circuit (e.g., the wireless communication module 192 in FIG. 1) included in the first example wearable electronic device 2 to operate as an antenna radiator.

According to various embodiments, the first example wearable electronic device 2 may include at least one fifth conductive pattern (e.g., the fifth conductive pattern 2041 in FIG. 20) disposed or included in the first frame 211 or positioned inside the first frame 211. At least one fifth conductive pattern may include, for example, at least a portion of a conductive part included in the first frame 211, or may be disposed (or positioned) in a non-conductive part of the first frame 211. At least one fifth conductive pattern may be electrically connected to a wireless communication circuit (e.g., the wireless communication module 192 in FIG. 1) included in the first example wearable electronic device 2 to operate as an antenna radiator.

According to an embodiment, the circuit assembly 3 may include a housing 31 and electrical components (or functional components) (not shown separately) disposed inside the housing 31. The housing 31 of the circuit assembly 3 may provide (or form) at least a part of the exterior of the circuit assembly 3. The electrical components of the circuit assembly 3 may include a processor, a memory, a communication module, a power management module, a light-emitting module, a battery, at least one antenna radiator, and/or wiring (or electrical paths). There may be various electrical components of the circuit assembly 3, in addition to those described above.

According to various embodiments, some of the plurality of components included in the electronic device 101 in FIG. 1 may be included in the circuit assembly 3, and others of the plurality of components included in the electronic device 101 in FIG. 1 may be disposed or accommodated in the frame 21.

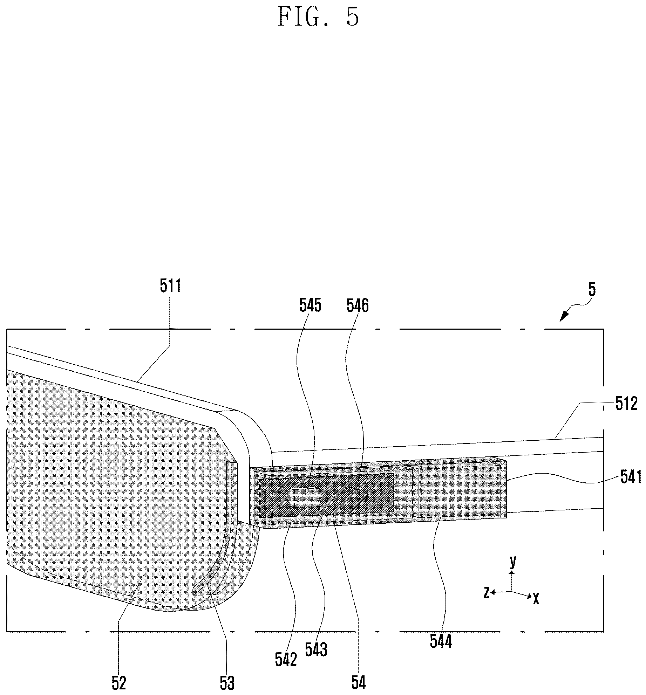

According to an embodiment, the circuit assembly 3 may include a board assembly (e.g., the board assembly 542 in FIG. 5) disposed inside the housing 31. The board assembly may include at least one printed circuit board, and electrical components disposed on or connected to at least one printed circuit board. The board assembly may further include structural components (e.g., a support or a support member) disposed on or connected to at least one printed circuit board.

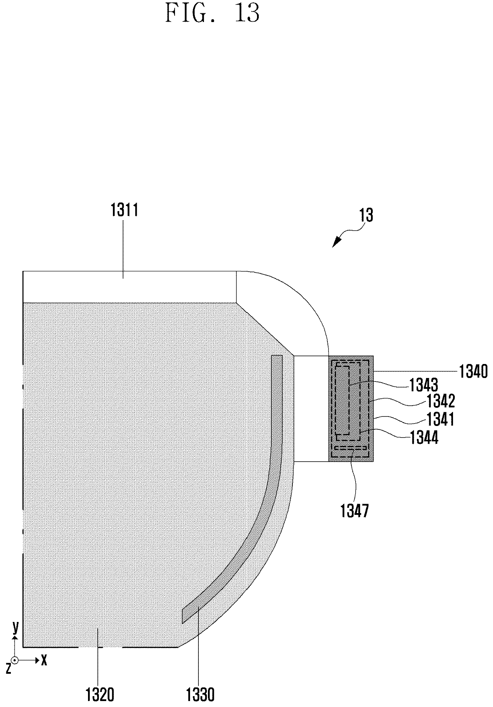

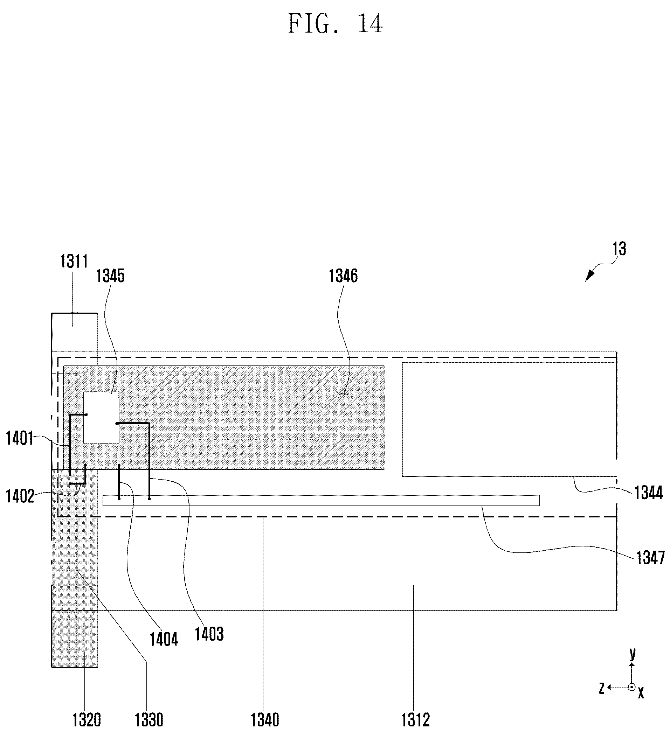

According to an embodiment, the circuit assembly 3 may include at least one sixth conductive pattern (e.g., the sixth conductive pattern 1347 in FIGS. 13 and 14). The wireless communication circuit (e.g., the wireless communication module 192 in FIG. 1) included in the circuit assembly 3 may be configured to transmit and/or receive a signal in at least one selected or designated frequency band via at least one sixth conductive pattern.

According to an embodiment, at least one sixth conductive pattern (e.g., the sixth conductive pattern 1347 in FIGS. 13 and 14) included in the circuit assembly 3 may be disposed on or included in a printed circuit board (not shown separately) located inside the housing 31.

According to an embodiment, at least one sixth conductive pattern (e.g., the sixth conductive pattern 1347 in FIGS. 13 and 14) included in the circuit assembly 3 may be disposed or included in a battery (e.g., the battery 189 in FIG. 1) positioned inside the housing 31.

According to an embodiment, at least one sixth conductive pattern (e.g., the sixth conductive pattern 1347 in FIGS. 13 and 14) included in the circuit assembly 3 may be disposed or included in the housing 31. At least one sixth conductive pattern may include at least a portion of a conductive part included in the housing 31, or may be disposed (or positioned) in a non-conductive part of the housing 31.

According to an embodiment, at least one sixth conductive pattern (e.g., the sixth conductive pattern 1347 in FIGS. 13 and 14) included in the circuit assembly 3 may be disposed or included in a support member (or a support) (not shown separately) positioned inside the housing 31.

According to an embodiment, the circuit assembly 3 may be attachable to and detachable from the frame 21. Hereinafter, a state in which the circuit assembly 3 is coupled (or disposed or attached) to the frame 21 will be defined as a "first state" of the first example wearable electronic device 2, and a state in which the circuit assembly 3 is separated from the frame 21 will be defined as a "second state" of the first example wearable electronic device 2.

According to an embodiment, the first example wearable electronic device 2 in the second state may weigh less than the first example wearable electronic device 2 in the first state, so that the user's fatigue may be reduced in the wearing state of the first example wearable electronic device 2. For example, in an environment requiring activity such as physical exercise, the user may determine that the functions through the circuit assembly 3 are unnecessary, and may prefer the second state to the first state of the first example wearable electronic device 2.

According to an embodiment, at least one electrical component disposed or accommodated in the frame 21 may be electrically connected to the circuit assembly 3 in the first state of the first example wearable electronic device 2, and may be electrically separated from the circuit assembly 3 in the second state of the first example wearable electronic device 2. For example, the first transparent display 22, the second transparent display 23, and/or other electrical component(s) disposed (or accommodated) in the frame 21 may be electrically connected to the circuit assembly 3 in the first state of the first example wearable electronic device 2, and electrically separated from the circuit assembly 3 in the second state of the first example wearable electronic device 2.

According to an embodiment, in the second state of the first example wearable electronic device 2, a battery (e.g., the battery 189 in FIG. 1) included in the circuit assembly 3 may be separated from the first example wearable electronic device 2.

According to various embodiments, the battery (e.g., the battery 189 in FIG. 1) may be disposed (or positioned) inside the frame 21. The battery may be electrically connected to the circuit assembly 3 in the first state of the first example wearable electronic device 2, and electrically separated from the circuit assembly 3 in the second state of the first example wearable electronic device 2.

According to various embodiments, the first example wearable electronic device 2 may include a first battery (not shown separately) included in the circuit assembly 3 and a second battery (not shown separately) disposed inside the frame 21. The second battery may be electrically connected to the circuit assembly 3 in the first state of the first example wearable electronic device 2, and electrically separated from the circuit assembly 3 in the second state of the first example wearable electronic device 2.

According to an embodiment, the first conductive pattern 24 disposed or included in the first transparent display 22 may be electrically connected to the wireless communication circuit (e.g., the wireless communication module 192 in FIG. 1) included in the circuit assembly 3 in the first state of the first example wearable electronic device 2, and electrically separated from the wireless communication circuit included in the circuit assembly 3 in the second state of the first example wearable electronic device 2.

According to an embodiment, the second conductive pattern (e.g., the second conductive pattern 45 in FIG. 4) disposed or included in the second transparent display 23 may be electrically connected to the wireless communication circuit (e.g., the wireless communication module 192 in FIG. 1) included in the circuit assembly 3 in the first state of the first example wearable electronic device 2, and electrically separated from the wireless communication circuit included in the circuit assembly 3 in the second state of the first example wearable electronic device 2.

According to various embodiments, a single transparent display (e.g., the transparent display 422 in FIG. 4) may be provided (or formed) in place of the first transparent display 22 and the second transparent display 23, and a third conductive pattern (e.g., the third conductive pattern 46 in FIG. 4) may be disposed or included in a third part connecting a first part corresponding to the left eye and a second part corresponding to the right eye in the single transparent display. The third conductive pattern may be electrically connected to the wireless communication circuit (e.g., the wireless communication module 192 in FIG. 1) included in the circuit assembly 3 in the first state of the first example wearable electronic device 2, and electrically separated from the wireless communication circuit included in the circuit assembly 3 in the second state of the first example wearable electronic device 2.

According to an embodiment, at least one fourth conductive pattern (e.g., the fourth conductive pattern 2031 in FIG. 20), disposed or included in the second frame 212 or the third frame 213 or positioned inside the second frame 212 or the third frame 213, may be electrically connected to the wireless communication circuit (e.g., the wireless communication module 192 in FIG. 1) included in the circuit assembly 3 in the first state of the first example wearable electronic device 2, and electrically separated from the wireless communication circuit included in the circuit assembly 3 in the second state of the first example wearable electronic device 2.

According to an embodiment, at least one fifth conductive pattern (e.g., the fifth conductive pattern 2041 in FIG. 20) disposed or included in the first frame 211 or positioned inside the first frame 211 may be electrically connected to the wireless communication circuit (e.g., the wireless communication module 192 in FIG. 1) included in the circuit assembly 3 in the first state of the first example wearable electronic device 2, and electrically separated from the wireless communication circuit included in the circuit assembly 3 in the second state of the first example wearable electronic device 2.

According to an embodiment, in the first state of the first example wearable electronic device 2, the wireless communication circuit (e.g., the wireless communication module 192 in FIG. 1) included in the circuit assembly 3 may be configured to transmit and/or receive a signal in at least one selected or designated frequency band through at least one of the first conductive pattern 24, the second conductive pattern (e.g., the second conductive pattern 45 in FIG. 4), at least one third conductive pattern (e.g., the third conductive pattern 46 in FIG. 4), at least one fourth conductive pattern (e.g., the fourth conductive pattern 2031 in FIG. 20), at least one fifth conductive pattern (e.g., the fifth conductive pattern 2041 in FIG. 20), and at least one sixth conductive pattern (e.g., the sixth conductive pattern 1347 in FIGS. 13 and 14) or a combination of at least two of them.

According to an embodiment, at least one selected or designated frequency band in which the wireless communication circuit (e.g., the wireless communication module 192 in FIG. 1) of the circuit assembly 3 processes a transmission signal and/or a reception signal may include at least one of a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The selected or designated frequency band may include various other frequency bands.

According to an embodiment, the circuit assembly 3 may be attachable to and detachable from the second frame 212.

According to an embodiment, the circuit assembly 3 may be attachable to and detachable from a recess 2122 provided (or formed) in the second frame 212.

According to an embodiment, the second frame 212 may include a fifth surface 212A and a sixth surface 212B. The fifth surface 212A may face the user's head in the wearing state of the first example wearable electronic device 2. The sixth surface 212B may be positioned on the opposite side of the fifth surface 212A. In an embodiment, the recess 2122 of the second frame 212 in which the circuit assembly 3 is disposed may be provided (or formed) in the sixth surface 212B. Providing (or forming) the recess 2122 in the sixth surface 212B may enable attachment/detachment of the circuit assembly 3 in the wearing state of the first example wearable electronic device 2.

According to various embodiments, the first example wearable electronic device 2 may include a cover (not shown separately) corresponding to the recess 2122 of the second frame 212. The cover may cover the recess 2122 of the second frame 212 from which the circuit assembly 3 is separated, thereby reducing the deterioration in the appearance of the first example wearable electronic device 2. For example, the cover may be slidably disposed (or positioned) on the second frame 212. The cover, for example, may be implemented to be separated from the second frame 212 and to be attached to the circuit assembly 3.

According to various embodiments, the first example wearable electronic device 2 may include a cover (not shown separately) capable of covering the circuit assembly 3 disposed in the recess 2122 of the second frame 212. The cover, for example, may be slidably disposed (or positioned) on the second frame 212. The cover may be implemented as, for example, a hinged cover.

According to an embodiment, when the circuit assembly 3 is disposed in the recess 2122 of the second frame 212, a first outer surface area provided (or formed) by the housing 31 of the circuit assembly 3, among the outer surfaces of the first example wearable electronic device 2, and a second outer surface area provided (or formed) by the second frame 212, among the outer surfaces of the first example wearable electronic device 2, may be smoothly connected without a substantial height difference.

According to various embodiments, although not shown separately, the depth of the recess 2122 may be formed (or provided) so that a part of the circuit assembly 3 disposed in the recess 211 protrudes from the sixth surface 212B of the second frame 212.

According to various embodiments, although not shown separately, the recess 2122 in which the circuit assembly 3 is disposed may be provided (or formed) in the fifth surface 212A of the second frame 212.

According to various embodiments, the second frame 212 may be provided (or formed) without the recess 2122. In order to reduce deterioration of rigidity of the second frame 212, the second frame 212 may be implemented without the recess 2122. In order to reduce deterioration in the appearance of the second frame 212, the second frame 212 may be implemented without the recess 2122. In a case where it is difficult to secure space for the recess 2122 without increasing the size (or volume) of the second frame 212, the second frame 212 may be implemented without the recess 2122.

According to an embodiment, in a case where the second frame 212 is implemented without the recess 2122, the circuit assembly 3 may be attachable to and detachable from the second frame 212 through a mechanical fastening such as a snap-fit. For example, a snap-fit may be a method of assembling a first component and a second component by pushing and connecting a first interlocking part of the first component and a second interlocking part of the second component that is in a counterpart relationship (mates) with the first interlocking part. When pushing and connecting the first interlocking part and the second interlocking part to each other, the first interlocking part and/or the second interlocking part may be interlocked with each other by bending and restoring. For example, the circuit assembly 3 may include at least one flexible part (e.g., a snap or a hook) as the first interlocking part, and the second frame 212 may include at least one catch as the second interlocking part.

According to various embodiments, although not shown separately, the snap-fit may be utilized between the circuit assembly 3 and the second frame 212 when the circuit assembly 3 is inserted into the recess 2122 of the second frame 212.

According to various embodiments, the circuit assembly 3 may be implemented to be attachable to and detachable from the second frame 212 using attractive and/or repulsive forces between magnetic materials.

Although not shown separately, there may be various methods by which the circuit assembly 3 is attachable to and detachable from the second frame 212 in addition to the above.

According to various embodiments, the position at which the circuit assembly 3 is attachable to and detachable from the frame 21 and/or the shape of the circuit assembly 3 corresponding to the position are not limited to the illustrated examples and may vary. The position at which the circuit assembly 3 is attachable to and detachable from the frame 21, and/or the shape of the circuit assembly 3 corresponding to the position may be implemented so as to reduce discomfort perceived by the user in the wearing state of the first example wearable electronic device 2.

According to various embodiments, although not separately illustrated, the housing 31 of the circuit assembly 3 may be implemented in a detachable form that replaces a part of the frame 21.

FIG. 4 is perspective views of the second, third, fourth, fifth, and sixth example wearable electronic devices 4A, 4B, 4C, 4D, and 4E according to various embodiments of the disclosure.

According to an embodiment, the second example wearable electronic device 4A may include a first frame 411A, a second frame 412, a third frame 413, a first transparent display 421, a second transparent display 431, a first conductive pattern 44, a second conductive pattern 45, and/or a circuit assembly 47.

According to an embodiment, in the second example wearable electronic device 4A, the first frame 411A may extend along the entire first edge of the first transparent display 421 and the entire second edge of the second transparent display 431. The first frame 411A may include a first rim (e.g., the first rim 211 in FIG. 2) surrounding the entire first edge of the first transparent display 421, a second rim (e.g., the second rim 212 in FIG. 2) surrounding the entire second edge of the second transparent display 431, and a bridge 4113 (e.g., the bridge 213 in FIG. 2) connecting the first rim and the second rim.

According to an embodiment, the third example wearable electronic device 4B may include a first frame 411B, a second frame 412, a third frame 413, a first transparent display 421, a second transparent display 431, a first conductive pattern 44, a second conductive pattern 45, and/or a circuit assembly 47.

According to an embodiment, in the third example wearable electronic device 4B, the first frame 411B may be provided (or formed) in a form corresponding to a portion of a first edge of the first transparent display 421 and a portion of a second edge of the second transparent display 431.

According to an embodiment, in the second example wearable electronic device 4A and/or the third example wearable electronic device 4B, the first conductive pattern 44 may be disposed or included in the first transparent display 421. The first conductive pattern 44 may be positioned adjacent to the first edge of the first transparent display 421 so as to reduce visual discomfort when the user's left eye views the first transparent display 421 in the wearing state of the second example wearable electronic device 4A or the third example wearable electronic device 4B.

According to various embodiments, although not shown separately, in the third example wearable electronic device 4B, at least a portion of the first conductive pattern 44 may be disposed (or positioned) on a portion of the first edge of the first transparent display 421 where the first frame 411B is not positioned. In various embodiments, in the third example wearable electronic device 4B, at least a portion of the first conductive pattern 44 may be disposed (or positioned) in a recess (not shown separately) or a notch (not shown separately) provided (or formed) in the first edge of the first transparent display 421. According to various embodiments, the combination of at least a portion of the first conductive pattern 44 and the first frame 411B may form (or provide) at least a portion of a bezel for the first transparent display 421.

According to an embodiment, in the second example wearable electronic device 4A and/or the third example wearable electronic device 4B, the second conductive pattern 45 may be disposed or included in the second transparent display 431. The second conductive pattern 44 may be positioned adjacent to the second edge of the second transparent display 431 so as to reduce visual discomfort when the user's right eye views the second transparent display 431 in the wearing state of the second example wearable electronic device 4A or the third example wearable electronic device 4B.

According to various embodiments, although not shown separately, in the third example wearable electronic device 4B, at least a portion of the second conductive pattern 45 may be disposed (or positioned) on a portion of the second edge of the second transparent display 431 where the first frame 411B is not positioned. In various embodiments, in the third example wearable electronic device 4B, at least a portion of the second conductive pattern 45 may be disposed (or positioned) in a recess (not shown separately) or a notch (not shown separately) provided (or formed) in the second edge of the second transparent display 431. In various embodiments, the combination of at least a portion of the second conductive pattern 45 and the first frame 411B may form (or provide) at least a portion of a bezel for the second transparent display 431.

According to an embodiment, the fourth example wearable electronic device 4C may include a first frame 411C, a second frame 412, a third frame 413, a transparent display 422, a first conductive pattern 44, a second conductive pattern 45, a third conductive pattern 46, and/or a circuit assembly 47.

According to an embodiment, the fifth example wearable electronic device 4D may include a first frame 411D, a second frame 412, a third frame 413, a transparent display 422, a first conductive pattern 44, a second conductive pattern 45, a third conductive pattern 46, and/or a circuit assembly 47.

According to an embodiment, the sixth example wearable electronic device 4E may include a first end piece 415, a second end piece 416, a second frame 412, a third frame 413, a transparent display 422, a first conductive pattern 44, a second conductive pattern 45, a third conductive pattern 46, and/or a circuit assembly 47.

According to an embodiment, in the fourth example wearable electronic device 4C, fifth example wearable electronic device 4D, and/or sixth example wearable electronic device 4E, the transparent display 422 may be provided (or formed) as an integrated structure (e.g., a single continuous structure) including a first part 4221 corresponding to the user's left eye, a second part 4222 corresponding to the user's right eye, and a third part 4223 connecting the first part 4221 and the second part 4222.

According to an embodiment, in the fourth example wearable electronic device 4C, the first frame 411C may extend along the entire edge of the transparent display 422. The first frame 411C may include a rim surrounding the entire edge of the transparent display 422.

According to an embodiment, in the fifth example wearable electronic device 4D, the first frame 411D may be provided (or formed) in a form corresponding to a portion of the edge of the transparent display 422.

According to an embodiment, the sixth example wearable electronic device 4E may be implemented to provide a substantially bezel-less structure by reducing the rim corresponding to the edge of the transparent display 422. The first end piece 415 may be coupled to one side of the transparent display 422. The first end piece 415 may be connected to the second frame 412 via a first hinge (e.g., the first hinge 214 in FIGS. 2 and 3). The second end piece 416 may be coupled to the other side of the transparent display 422. The second end piece 416 may be connected to the third frame 413 via a second hinge (e.g., the second hinge 215 in FIGS. 2 and 3).

According to an embodiment, in the fourth example wearable electronic device 4C, the fifth example wearable electronic device 4D, and/or the sixth wearable electronic device 4E, the first conductive pattern 44 may be positioned or included in the first part 4221 of the transparent display 422. The first conductive pattern 44, in the wearing state of the fourth example wearable electronic device 4C, may be positioned adjacent to the edge of the first part 4221 so as to reduce visual discomfort when the user's left eye views the first part 4221 of the transparent display 422.

According to various embodiments, although not shown separately, in the fifth example wearable electronic device 4D, at least a portion of the first conductive pattern 44 may be disposed (or positioned) on a portion of the edge of the first part 4221 where the first frame 411D is not disposed. In various embodiments, in the fifth example wearable electronic device 4D, at least a portion of the first conductive pattern 44 may be disposed (or positioned) in a recess (not shown separately) or a notch (not shown separately) provided (or formed) on the edge of the first part 4221. In various embodiments, the combination of at least a portion of the first conductive pattern 44 and the first frame 411D may form (or provide) at least a portion of a bezel for the first part 4221.

According to various embodiments, although not shown separately, in the sixth example wearable electronic device 4E, at least a portion of the first conductive pattern 44 may be disposed (or positioned) on the edge of the first part 4221. According to various embodiments, in the sixth example wearable electronic device 4E, at least a portion of the first conductive pattern 44 may be disposed (or positioned) in a recess (not shown separately) or a notch (not shown separately) provided (or formed) on the edge of the first part 4221. In various embodiments, at least a portion of the first conductive pattern 44 may form (or provide) at least a portion of a bezel for the first part 4221.

According to an embodiment, in the fourth example wearable electronic device 4C, the fifth example wearable electronic device 4D, and/or the sixth example wearable electronic device 4E, the second conductive pattern 45 may be disposed or included in the second part 4222 of the transparent display 422. The second conductive pattern 45, in the wearing state of the fourth example wearable electronic device 4C, may be positioned adjacent to the edge of the second part 4222 so as to reduce visual discomfort when the user's right eye views the second part 4222 of the transparent display 422.

According to various embodiments, although not shown separately, in the fifth example wearable electronic device 4D, at least a portion of the second conductive pattern 45 may be disposed (or positioned) on a portion of the edge of the second part 4222 where the first frame 411D is not disposed. In various embodiments, in the fifth example wearable electronic device 4D, at least a portion of the second conductive pattern 45 may be disposed (or positioned) in a recess (not shown separately) or a notch (not shown separately) provided (or formed) on the edge of the second part 4222. In various embodiments, the combination of at least a portion of the second conductive pattern 45 and the first frame 411D may form (or provide) at least a portion of a bezel for the second part 4222.

According to various embodiments, although not shown separately, in the sixth example wearable electronic device 4E, at least a portion of the second conductive pattern 45 may be disposed (or positioned) on the edge of the second part 4222. In various embodiments, in the sixth example wearable electronic device 4E, at least a portion of the second conductive pattern 45 may be disposed (or positioned) in a recess (not shown separately) or a notch (not shown separately) provided (or formed) on the edge of the second part 4222. In various embodiments, at least a portion of the second conductive pattern 45 may form (or provide) at least a portion of a bezel for the second part 4222.

According to an embodiment, in the fourth example wearable electronic device 4C, the fifth example wearable electronic device 4D, and/or the sixth example wearable electronic device 4E, the third conductive pattern 46 may be disposed or included in the third part 4223 of the transparent display 422.

According to an embodiment, the second example wearable electronic device 4A, the third example wearable electronic device 4B, the fourth example wearable electronic device 4C, the fifth example wearable electronic device 4D, or the sixth example wearable electronic device 4E may be implemented such that the circuit assembly 47 is attachable to and detachable from the second frame 412 through a mechanical fastening such as a snap-fit.

Although not shown separately, the second example wearable electronic device 4A, the third example wearable electronic device 4B, the fourth example wearable electronic device 4C, the fifth example wearable electronic device 4D, or the sixth example wearable electronic device 4E may be implemented such that the circuit assembly 47 is attachable to and detachable from the third frame 413 through a mechanical fastening such as a snap-fit.

According to various embodiments, the second example wearable electronic device 4A, the third example wearable electronic device 4B, the fourth example wearable electronic device 4C, or the fifth example wearable electronic device 4D may be implemented such that the circuit assembly 47 is attachable to and detachable from the first frame 411A, 411B, 411C, or 411D through a mechanical fastening such as a snap-fit, as indicated by 471.

According to an embodiment, the second example wearable electronic device 4A, the third example wearable electronic device 4B, the fourth example wearable electronic device 4C, the fifth example wearable electronic device 4D, and/or the sixth example wearable electronic device 4E may include at least one electrical path (not shown separately) electrically connecting the circuit assembly 47 and the first conductive pattern 44.

According to an embodiment, the second example wearable electronic device 4A, the third example wearable electronic device 4B, the fourth example wearable electronic device 4C, the fifth example wearable electronic device 4D, and/or the sixth example wearable electronic device 4E may include at least one electrical path (not shown separately) electrically connecting the circuit assembly 47 and the second conductive pattern 45.

According to an embodiment, the fourth example wearable electronic device 4C, the fifth example wearable electronic device 4D, and/or the sixth example wearable electronic device 4E may include at least one electrical path (not shown separately) electrically connecting the circuit assembly 47 and the third conductive pattern 46.

According to various embodiments, in a case where the first conductive pattern 44 is omitted from the second example wearable electronic device 4A and/or the third example wearable electronic device 4B, the circuit assembly 47 may be implemented to be attachable to and detachable from the third frame 413 so as to reduce the length of the electrical path between the second conductive pattern 45 and the circuit assembly 47.

According to various embodiments, in a case where the second conductive pattern 45 is omitted from the second example wearable electronic device 4A and/or the third example wearable electronic device 4B, the circuit assembly 47 may be implemented to be attachable to and detachable from the second frame 412 so as to reduce the length of the electrical path between the first conductive pattern 44 and the circuit assembly 47.

According to various embodiments, in a case where the first conductive pattern 44 and the second conductive pattern 45 are omitted from the fourth example wearable electronic device 4C and/or the fifth example wearable electronic device 4D, the circuit assembly 47 may be implemented to be attachable to and detachable from the first frame 411C or 411D so as to reduce the length of the electrical path between the third conductive pattern 46 and the circuit assembly 47.

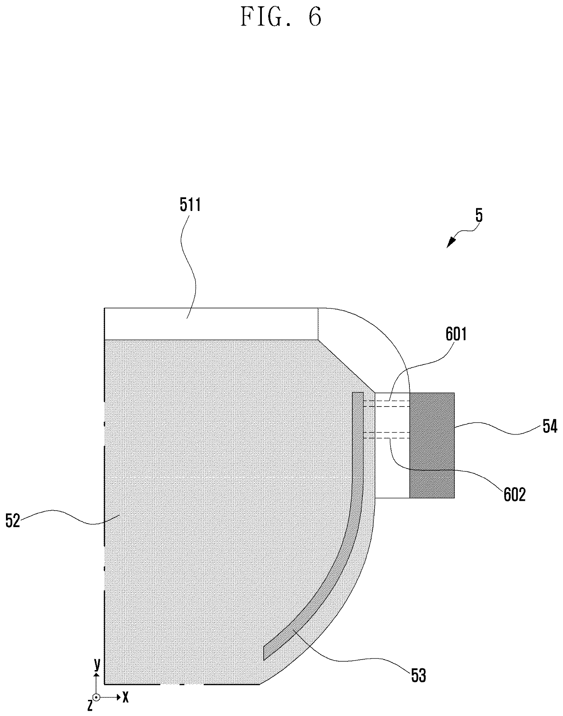

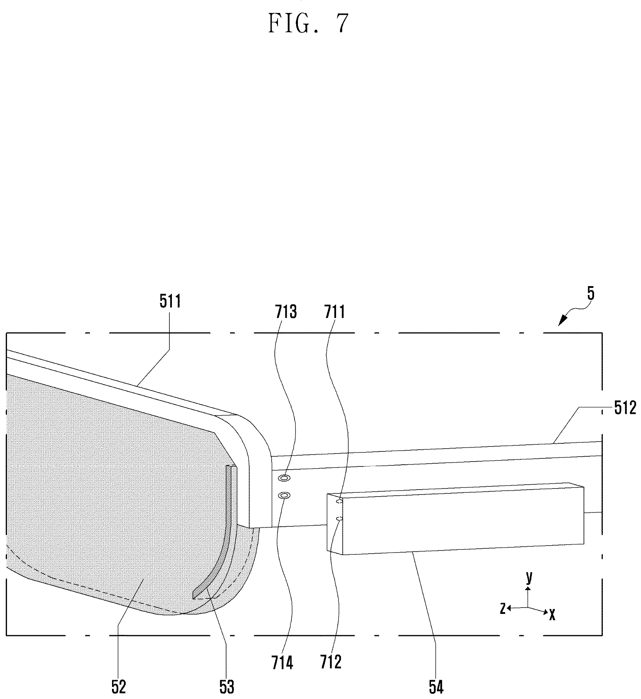

FIG. 5 is a perspective view of a seventh example wearable electronic device 5 according to an embodiment of the disclosure. FIG. 6 is a diagram illustrating a seventh example wearable electronic device 5 according to an embodiment of the disclosure. FIG. 7 is a perspective view illustrating a state where a circuit assembly 47 is separated from the seventh example wearable electronic device 5 according to an embodiment of the disclosure.

Referring to FIGS. 5, 6, and 7, the seventh example wearable electronic device 5 may include a first frame 511 (e.g., the first frame 411B or 411D in FIG. 4), a second frame 512 (e.g., the second frame 412 in FIG. 4), a transparent display 52 (e.g., the first transparent display 421 or transparent display 422 in FIG. 4), a first conductive pattern 53 (e.g., the first conductive pattern 44 in FIG. 4), and/or a circuit assembly 54 (e.g., the circuit assembly 47 in FIG. 4).

According to an embodiment, when the circuit assembly 54 is coupled (or attached) to the second frame 512, the circuit assembly 54 may be electrically connected to the first conductive pattern 53. When the circuit assembly 54 is separated from the second frame 512, the circuit assembly 54 may be electrically separated from the first conductive pattern 53.

According to an embodiment, the circuit assembly 54 may include a housing 541 (e.g., the housing 31 in FIGS. 2 and 3) and a board assembly 542 accommodated in the housing 541.

According to an embodiment, the board assembly 542 may include at least one printed circuit board 543, and electrical components disposed on or connected to at least one printed circuit board 543. For example, the board assembly 542 may include a processor (e.g., the processor 120 in FIG. 1), a memory (e.g., the memory 130 in FIG. 1), a communication module (e.g., the communication module 190 in FIG. 1), a power management module (e.g., the power management module 188 in FIG. 1), a battery 544 (e.g., the battery 189 in FIG. 1), and/or wiring (or electrical paths) (not shown separately), which are disposed on at least one printed circuit board 543, or may include various other electrical components. In various embodiments, the board assembly 542 may include structural components (e.g., a support or support member) (not shown separately) disposed on or connected to at least one printed circuit board 543.

According to various embodiments, some of the plurality of components included in the electronic device 101 in FIG. 1 may be included in the board assembly 542, and others of the plurality of components included in the electronic device 101 in FIG. 1 may be disposed or accommodated in the first frame 511, the second frame 512, or the third frame (e.g., the third frame 213 in FIGS. 2 and 3 or the third frame 413 in FIG. 4).

According to an embodiment, the board assembly 542 may include a wireless communication circuit 545 (the wireless communication module 192 in FIG. 1) disposed on at least one printed circuit board 543.

According to an embodiment, the circuit assembly 54 may include a ground (or ground structure) 546. The ground 546 may include a ground region (e.g., a ground plane or a combination of ground planes) included in at least one printed circuit board 543. The ground 546 may further include at least one conductor (or metal body) (not shown separately) electrically connected to the ground region included in at least one printed circuit board 543. At least one conductor may be disposed or included in, for example, the housing 541. At least one conductor may be disposed or included in a structural component (e.g., a support or support member) (not shown separately) positioned in the inner space of the housing 541.

According to an embodiment, the ground 546 of the circuit assembly 54 may reduce or prevent electromagnetic interference (EMI) to a plurality of electrical components included in the circuit assembly 54. The ground 546 of the circuit assembly 54 may reduce or prevent electromagnetic interference between a plurality of electrical components included in the circuit assembly 54. The ground 546 of the circuit assembly 54 may reduce or prevent electromagnetic influence (e.g., electromagnetic interference (EMI)) of noise from the outside of the circuit assembly 54 on a plurality of electrical components included in the circuit assembly 54.

According to an embodiment, the first conductive pattern 53 may be electrically connected to the wireless communication circuit 545 of the circuit assembly 54. The first conductive pattern 53 may receive (or supplied with) an electromagnetic signal (or a wireless signal, an RF signal, or a radiation current) from the wireless communication circuit 545 and operate as an antenna radiator (or a radiator, a radiating portion, or a resonator).

According to an embodiment, the first conductive pattern 53 may be electrically connected to the ground 546 of the circuit assembly 54.

According to an embodiment, at least a portion of the ground 546 of the circuit assembly 54 may be configured to operate as an antenna ground that exerts an electromagnetic influence on the antenna radiator (e.g., the first conductive pattern 53). The antenna ground may contribute to securing antenna radiation performance (or radio transmission/reception performance or communication performance) and/or securing coverage for the antenna radiator. The antenna ground may reduce electromagnetic interference (EMI) or signal loss with respect to the antenna radiator.

According to an embodiment, the first conductive pattern 53 may be electrically connected to the wireless communication circuit 545 and the ground 546 of the circuit assembly 54 to operate as a patch antenna, an inverted F antenna (IFA), or a planar IFA (PIFA). When the wireless communication circuit 545 provides (or feeds) an electromagnetic signal (or a radio signal, an RF signal, or a radiation current) to the first conductive pattern (or first patch) 53, the first conductive pattern 53 may act as a radiating element while resonating with the ground 546, thereby operating as a resonator.

According to an embodiment, the seventh example wearable electronic device 5 may include a first electrical path 601 and a second electrical path 602 that electrically connect the first conductive pattern 53 and the circuit assembly 54.

According to an embodiment, the first electrical path 601 may electrically connect the first conductive pattern 53 and the wireless communication circuit 54. The wireless communication circuit 54 may provide (or feed) an electromagnetic signal (or a radio signal, an RF signal, or a radiation current) to the first conductive pattern 53 through the first electrical path 601. The first electrical path 601 may be defined or interpreted as a "feeding line" or a "transmission line" through which electromagnetic signals are transmitted. A point in the first conductive pattern 53, which is electrically connected to the first electrical path 601, may be defined or interpreted as a "feeding point".

According to an embodiment, the second electrical path 602 may electrically connect the first conductive pattern 53 and the ground 546. The second electrical path 602 may be defined or interpreted as a "grounding line". A point in the first conductive patterns 53, which is electrically connected to the second electrical path 602, may be defined or interpreted as a "grounding point (feeding point)".

According to an embodiment, the first electrical path 601 may include a first connector 711 included in the circuit assembly 54, and a third connector 713 disposed in the second frame 512. The first connector 711 may be exposed to the outside of the housing 541 through an opening (or hole) (not shown separately) of the housing 541 of the circuit assembly 54. The third connector 713 may be exposed to the outside of the second frame 512 through an opening (or hole) of the second frame 512. The first connector 711 may be electrically connected to the wireless communication circuit 545 of the circuit assembly 54. The third connector 713 may be electrically connected to the first conductive pattern 53. When the circuit assembly 54 is attached (or coupled) to the second frame 512, the first connector 711 and the third connector 713 may be electrically connected.

According to an embodiment, the first connector 711 may be disposed on at least one printed circuit board 543 and may be electrically connected to the wireless communication circuit 545 through a conductive path (or wiring) (not shown separately) included in at least one printed circuit board 543.

According to various embodiments, the first connector 711 may be electrically connected to at least one printed circuit board 543 through an electrical connection member (or electrical connector) such as a cable.

According to an embodiment, the first electrical path 601 may include a conductive path (or wiring) (not shown separately) electrically connecting the third connector 713 and the first conductive pattern 53. The conductive path electrically connecting the third connector 713 and the first conductive pattern 53 may pass through a first connection (or a first hinge connection) (e.g., a part including the hinge 214 in FIGS. 2 and 3) between the first frame 511 and the second frame 512, or may utilize at least a portion of the conductive part included in the first connection.

According to an embodiment, the second electrical path 602 may include a second connector 712 included in the circuit assembly 54, and a fourth connector 714 disposed on the second frame 512. The second connector 712 may be exposed to the outside of the housing 541 through an opening (or hole) (not shown separately) of the housing 541 of the circuit assembly 54. The fourth connector 714 may be exposed to the outside of the second frame 512 through an opening (or hole) of the second frame 512. The second connector 712 may be electrically connected to the ground 546 of the circuit assembly 54. The fourth connector 714 may be electrically connected to the first conductive pattern 53. When the circuit assembly 54 is attached (or coupled) to the second frame 512, the second connector 712 and the fourth connector 714 may be electrically connected.

According to an embodiment, the second connector 712 may be disposed on at least one printed circuit board 543 and electrically connected to the ground 546 via a conductive path (or wiring) (not shown separately) included in at least one printed circuit board 543. In various embodiments, the second connector 712 may be disposed (or positioned) on the ground 546.

According to various embodiments, the second connector 712 may be electrically connected to at least one printed circuit board 543 via an electrical connecting member (or electrical connector) such as a cable.

According to an embodiment, the second electrical path 602 may include a conductive path (or wiring) (not shown separately) electrically connecting the fourth connector 714 and the first conductive pattern 53. The conductive path electrically connecting the fourth connector 714 and the first conductive pattern 53 may pass through the first connection (or the first hinge connection) (e.g., a part including the hinge 214 in FIGS. 2 and 3) between the first frame 511 and the second frame 512, or may utilize at least a portion of the conductive part included in the first connection.

According to an embodiment, the first connector 711 may include a first flexible conductor. The second connector 712 may include a second flexible conductor. The third connector 713 may include a first conductive terminal. The fourth connector 714 may include a second conductive terminal. When the circuit assembly 54 is attached (or coupled) to the second frame 512, the first flexible conductor may come into resilient contact with the first conductive terminal, and the second flexible conductor may come into resilient contact with the second conductive terminal. For example, the first flexible conductor and/or the second flexible conductor may include a pogo pin, a conductive clip (e.g., a conductive structure including a resilient structure), a spring, conductive Poron, a conductive sponge, conductive rubber, a conductive tape, or a conductive connector.

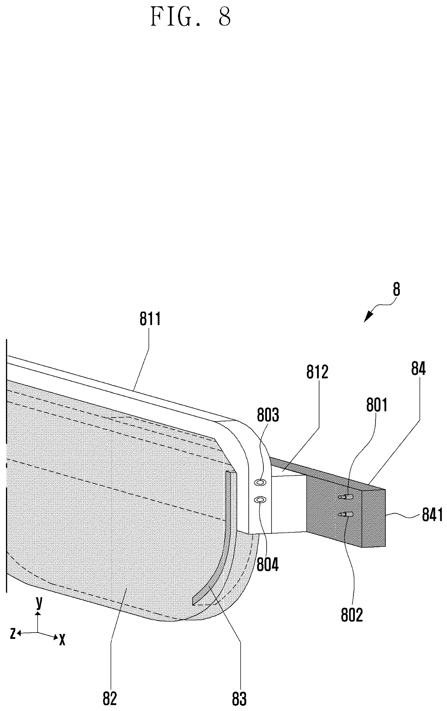

FIG. 8 is a perspective view of an eighth example wearable electronic device 8 according to an embodiment of the disclosure.

Referring to FIG. 8, the eighth example wearable electronic device 8 may include a first frame 811 (e.g., the first frame 411B or 411D in FIG. 4), a second frame 812 (e.g., the second frame 412 in FIG. 4), a transparent display 82 (e.g., the first transparent display 421 or transparent display 422 in FIG. 4), a first conductive pattern 83 (e.g., the first conductive pattern 44 in FIG. 4), a circuit assembly 84 (e.g., the circuit assembly 47 in FIG. 4), a first connector 801, a second connector 802, a third connector 803, and/or a fourth connector 804.

According to an embodiment, the first connector 801 may be disposed (or positioned) in the circuit assembly 84. The first connector 801 may be exposed to the outside of the housing 841 through an opening (or hole) of the housing 841 (e.g., the housing 541 in FIG. 5) of the circuit assembly 84. The first connector 801 may be electrically connected to a wireless communication circuit (e.g., wireless communication circuit 545 in FIG. 5) included in the circuit assembly 84.

According to an embodiment, the second connector 802 may be disposed (or positioned) in the circuit assembly 84. The second connector 802 may be exposed to the outside of the housing 841 through an opening (or hole) of the housing 841 (e.g., the housing 541 in FIG. 5) of the circuit assembly 84. The second connector 802 may be electrically connected to a ground (e.g., the ground 546 in FIG. 5) included in the circuit assembly 84.

According to an embodiment, the first connector 801 may include a first flexible conductor such as a pogo pin. The second connector 802 may include a second flexible conductor, such as a pogo pin.

According to an embodiment, the third connector 803 may be disposed (or positioned) in the first frame 811. The third connector 803 may be exposed to the outside of the first frame 811 through an opening (or hole) of the first frame 811. The third connector 803 may be electrically connected to the first conductive pattern 83.

According to an embodiment, the fourth connector 804 may be disposed (or positioned) on the first frame 811. The fourth connector 804 may be exposed to the outside of the first frame 811 through an opening (or hole) of the first frame 811. The fourth connector 804 may be electrically connected to the first conductive pattern 83.

According to an embodiment, the third connector 803 may include a first conductive terminal. The fourth connector 804 may include a second conductive terminal.

According to an embodiment, the combination of the first frame 811 and the second frame 812 may be in an unfolded state or a folded state depending on the angle between the first frame 811 and the second frame 812. FIG. 8 illustrates a folded state.

According to an embodiment, when the combination of the first frame 811 and the second frame 812 is in an unfolded state (not shown separately), the first connector 801 disposed in the circuit assembly 84 included in the second frame 812 may come into physical contact with the third connector 803 disposed in the first frame 811, and the first connector 801 and the third connector 803 may be electrically connected. When the combination of the first frame 811 and the second frame 812 is in the unfolded state, the second connector 802 disposed in the circuit assembly 84 included in the second frame 812 may come into physical contact with the fourth connector 804 disposed in the first frame 811, and the second connector 802 and the fourth connector 804 may be electrically connected.

According to an embodiment, when the combination of the first frame 811 and the second frame 812 is in a folded state, the first connector 801 disposed in the circuit assembly 84 included in the second frame 812 may be physically separated from the third connector 803 disposed in the first frame 811, and the first connector 801 and the third connector 803 may be electrically separated. When the combination of the first frame 811 and the second frame 812 is in the folded state, the second connector 802 disposed in the circuit assembly 84 included in the second frame 812 may be physically separated from the fourth connector 804 disposed in the first frame 811, and the second connector 802 and the fourth connector 804 may be electrically separated.

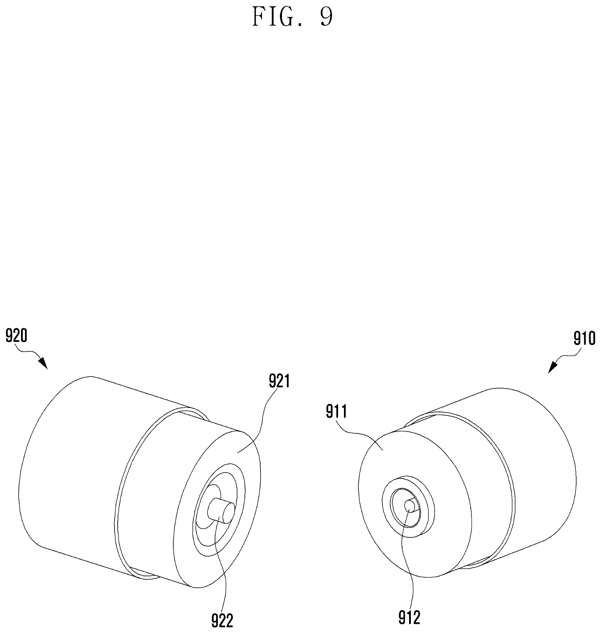

FIG. 9 is a perspective view of a male connector 910 and a female connector 920 according to various embodiments of the disclosure.

According to an embodiment, one of the male connector 910 and the female connector 920 may replace the first connector 711 of the seventh example wearable electronic device 5 in FIG. 7. The remaining one of the male connector 910 and the female connector 920 may replace the third connector 713 of the seventh example wearable electronic device 5 in FIG. 7.

According to an embodiment, one of the male connector 910 and the female connector 920 may replace the second connector 712 of the seventh example wearable electronic device 5 in FIG. 7. The remaining one of the male connector 910 and the female connector 920 may replace the fourth connector 714 of the seventh example wearable electronic device 5 in FIG. 7.

According to an embodiment, one of the male connector 910 and the female connector 920 may replace the first connector 801 of the eighth example wearable electronic device 8 in FIG. 8. The remaining one of the male connector 910 and the female connector 920 may replace the third connector 803 of the eighth example wearable electronic device 8 in FIG. 8.

According to an embodiment, one of the male connector 910 and the female connector 920 may replace the second connector 802 of the eighth example wearable electronic device 8 in FIG. 8. The remaining one of the male connector 910 and the female connector 920 may replace the fourth connector 804 of the eighth example wearable electronic device 8 in FIG. 8.

According to an embodiment, the male connector 910 may be a first magnetic connector, and the female connector 920 may be a second magnetic connector. The male connector 910 may include a first magnetic body 911 and a first terminal 912. The female connector 92 may include a second magnetic body 921 and a second terminal 922. The attractive force between the first magnetic body 911 and the second magnetic body 921 may be utilized to couple the male connector 910 and the female connector 920. When the male connector 910 and the female connector 920 are coupled, the first terminal 912 and the second terminal 922 may come into physical contact with each other and may be electrically connected to each other.

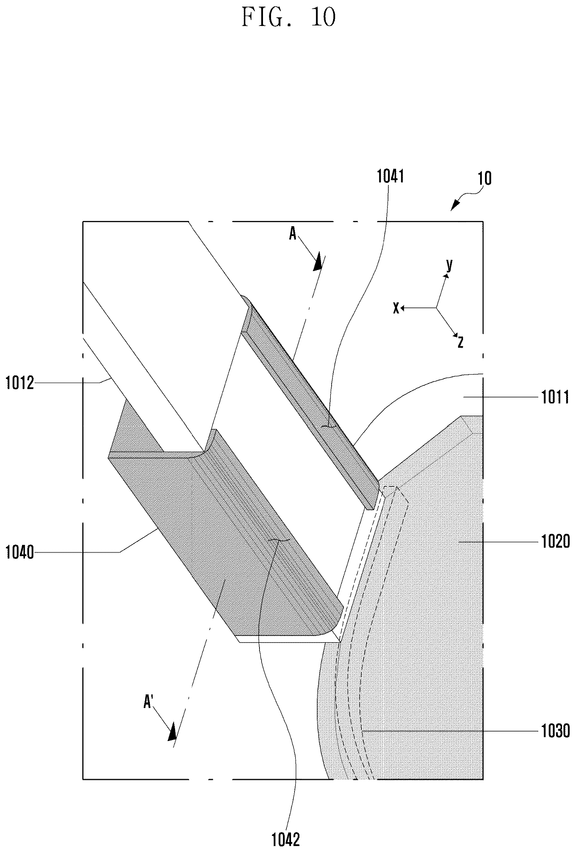

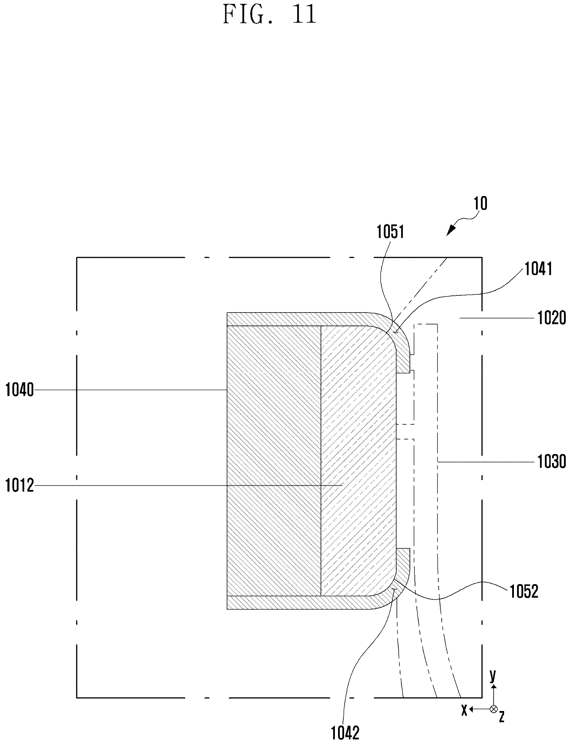

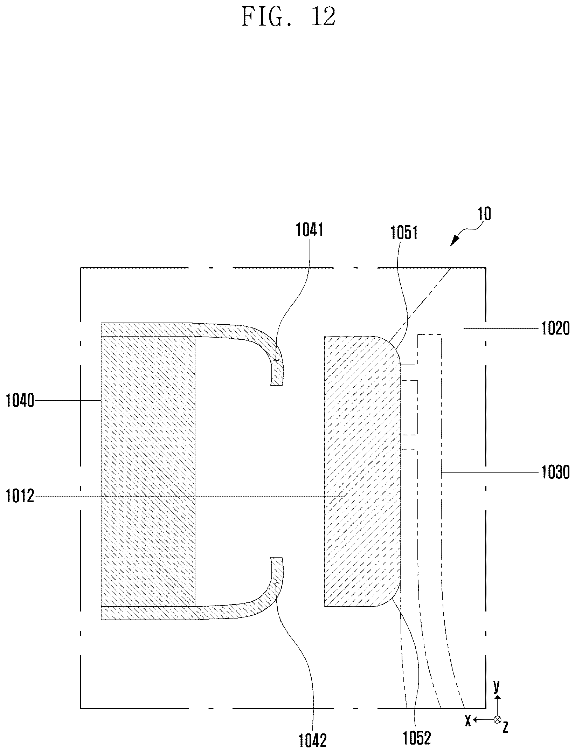

FIG. 10 is a perspective view of a ninth example wearable electronic device 10 according to an embodiment of the disclosure. FIG. 11 is a cross-sectional view of the ninth example wearable electronic device 10 taken along line A-A' in FIG. 10 according to an embodiment of the disclosure. FIG. 12 is a cross-sectional view of the ninth example wearable electronic device 10 in which a circuit assembly 1040 is separated according to an embodiment of the disclosure.

Referring to FIGS. 10, 11, and 12, the ninth example wearable electronic device 10 may include a first frame 1011 (e.g., the first frame 411B or 411D in FIG. 4), a second frame 1012 (e.g., the second frame 412 in FIG. 4), a transparent display 1020 (e.g., the first transparent display 421 or transparent display 422 in FIG. 4), a first conductive pattern 1030 (e.g., the first conductive pattern 44 in FIG. 4), and/or a circuit assembly 1040 (e.g., the circuit assembly 47 in FIG. 4).

According to an embodiment, the circuit assembly 1040 may be attached to and detached from the second frame 1012 via a snap-fit.

According to an embodiment, the circuit assembly 1040 may include a pair of first interlocking parts 1041 and 1042. The second frame 1012 may include a pair of second interlocking parts 1051 and 1052 corresponding to the pair of first interlocking parts 1041 and 1042 (or in a counterpart relationship with the pair of first interlocking parts 1041 and 1042). The pair of first interlocking parts 1041 and 1042 may be implemented as a flexible snap (or hook). The pair of second interlocking parts 1051 and 1052 may be implemented as a catch corresponding to the flexible snap.

According to an embodiment, when attaching the circuit assembly 1040 to the second frame 1012, the pair of first interlocking parts 1041 and 1042 may be bent and then restored to interlock with the pair of second interlocking parts 1051 and 1052.

FIG. 13 is a diagram of a tenth example wearable electronic device 13 according to an embodiment of the disclosure. FIG. 14 is a diagram of the tenth example wearable electronic device 13 according to an embodiment of the disclosure.

Referring to FIGS. 13 and 14, the tenth example wearable electronic device 13 may include a first frame 1311 (e.g., the first frame 411B or 411D in FIG. 4), a second frame 1312 (e.g., the second frame 412 in FIG. 4), a transparent display 1320 (e.g., the first transparent display 421 or transparent display 422 in FIG. 4), a first conductive pattern 1330 (e.g., the first conductive pattern 44 in FIG. 4), and/or a circuit assembly 1340 (e.g., the circuit assembly 47 in FIG. 4).

According to an embodiment, the circuit assembly 1340 may include a housing 1341 (e.g., the housing 541 in FIG. 5) and a board assembly 1342 (e.g., the board assembly 542 in FIG. 5) accommodated in the housing 1341.

According to an embodiment, the board assembly 1342 may include at least one printed circuit board 1343, and electrical components disposed on or connected to the at least one printed circuit board 1343. The board assembly 1342 may include a processor (e.g., the processor 120 in FIG. 1), a memory (e.g., the memory 130 in FIG. 1), a communication module (e.g., the communication module 190 in FIG. 1), a power management module (e.g., the power management module 188 in FIG. 1), a battery 1344 (e.g., the battery 189 in FIG. 1), and/or wiring (or electrical paths) (not shown separately), which are disposed on at least one printed circuit board 1343, or may include various other electrical components. According to various embodiments, the board assembly 1342 may include structural components (e.g., a support or support member) (not shown separately) disposed on or connected to at least one printed circuit board 1343.

According to various embodiments, some of the plurality of components included in the electronic device 101 in FIG. 1 may be included in the board assembly 1342, and others of the plurality of components included in the electronic device 101 in FIG. 1 may be disposed or accommodated in the first frame 1311, the second frame 1312, or the third frame (e.g., the third frame 213 in FIGS. 2 and 3 or the third frame 413 in FIG. 4).

According to an embodiment, the board assembly 1342 may include a wireless communication circuit 1345 (the wireless communication module 192 in FIG. 1) disposed on at least one printed circuit board 1343.

According to an embodiment, the circuit assembly 1340 may include a ground (or ground structure) 1346. The ground 1346 may include a ground region (e.g., a ground plane or a combination of ground planes) included in at least one printed circuit board 1343. The ground 1346 may further include at least one conductor (or metal body) (not shown separately) electrically connected to the ground region included in at least one printed circuit board 1343. At least one conductor may be disposed or included in, for example, the housing 1341. At least one conductor may be disposed or included in a structural component (e.g., a support or support member) (not shown separately) positioned in the inner space of the housing 1341.

According to an embodiment, the first conductive pattern 1330 at least partially disposed or included in the transparent display 1320 may be electrically connected to a wireless communication circuit 1345 of the circuit assembly 1340. The first conductive pattern 1330 may receive (or supplied with) an electromagnetic signal (or a wireless signal, an RF signal, or a radiation current) from the wireless communication circuit 1345 and operate as an antenna radiator (or a radiator, a radiating portion, or a resonator).

According to an embodiment, the first conductive pattern 1330 may be electrically connected to a ground 1346 of the circuit assembly 1340.

According to an embodiment, the tenth example wearable electronic device 13 may include a first electrical path 1401 (e.g., a first transmission line or a first feeding line) that electrically connects the first conductive pattern 1330 and the wireless communication circuit 1345 of the circuit assembly 1340.

According to an embodiment, the tenth example wearable electronic device 13 may include a second electrical path 1402 (e.g., a first grounding line) that electrically connects the first conductive pattern 1330 and the ground 1346 of the circuit assembly 1340.

According to an embodiment, the circuit assembly 1340 may include a sixth conductive pattern 1347. The wireless communication circuit 1345 of the circuit assembly 3 may be configured to transmit and/or receive a signal in at least one selected or designated frequency band via the sixth conductive pattern 1347.

According to an embodiment, the sixth conductive pattern 1347 may be electrically connected to the ground 1346 of the circuit assembly 3.

According to an embodiment, the circuit assembly 1340 may include a third electrical path 1403 (e.g., a second transmission line or a second feeding line) that electrically connects the sixth conductive pattern 1347 and the wireless communication circuit 1345.

According to an embodiment, the circuit assembly 1340 may include a fourth electrical path 1404 (e.g., a second grounding line) that electrically connects the sixth conductive pattern 1347 and the ground 1346.

According to an embodiment, the sixth conductive pattern 1347 may be positioned physically separate from at least one printed circuit board 1343.

According to various embodiments, although not shown separately, the sixth conductive pattern 1347 may be disposed or included in at least one printed circuit board 1343.

According to various embodiments, although not shown separately, the sixth conductive pattern 1347 may be disposed or included in a battery 1344.

According to various embodiments, although not shown separately, the sixth conductive pattern 1347 may be disposed or included in the housing 1341. The sixth conductive pattern 1347 may include at least a portion of a conductive part included in the housing 1341, or may be disposed (or positioned) in a non-conductive part of the housing 1341.

According to various embodiments, although not shown separately, the sixth conductive pattern 1347 may be disposed or included in a support member (or a support) (not shown separately) positioned inside the housing 1341.

According to various embodiments, a portion (e.g., the sixth conductive pattern 1347) of the ground 1346 may be configured as an antenna radiator. A portion (e.g., the sixth conductive pattern 1347 in FIG. 6) of the ground 1346 of the tenth example wearable electronic device 13 may be electrically connected to the wireless communication circuit 1345. A portion (e.g., the sixth conductive pattern 1347 in FIG. 6) of the ground 1346 of the tenth example wearable electronic device 13 may receive (or supplied with) an electromagnetic signal (or a wireless signal, an RF signal, or a radiation current) from the wireless communication circuit 1345 and operate as an antenna radiator (or a radiator, a radiating portion, or a resonator). Another portion of the ground 1346 may be configured to operate as an antenna ground for the sixth conductive pattern 1347.

According to an embodiment, at least a portion of the ground 1346 of the circuit assembly 1340 may be configured to act as an antenna ground that exerts an electromagnetic influence on the first conductive pattern 1330 and/or the sixth conductive pattern 1347. The antenna ground may contribute to securing antenna radiation performance (or radio transmission/reception performance or communication performance) and/or securing coverage for the first conductive pattern 1330 and/or the sixth conductive pattern 1347. The antenna ground may reduce electromagnetic interference (EMI) or signal loss with respect to the first conductive pattern 1330 and/or the second conductive pattern 1347.

According to various embodiments, the wireless communication circuit 1345 of the circuit assembly 1340 may be configured to transmit and/or receive a signal in at least one selected or designated frequency band through the first conductive pattern 1330, the sixth conductive pattern 1347, or a combination of the first conductive pattern 1330 and the sixth conductive pattern 1347.

According to various embodiments, the circuit assembly 1340 or the wireless communication circuit 1345 may include a matching circuit (not shown separately). For example, the matching circuit may include an electrical element having a component such as an inductance, a capacitance, or a conductance that acts on the first electrical path 1401, the second electrical path 1402, the third electrical path 1403, and/or the fourth electrical path 1404. For example, the matching circuit may include various components such as lumped elements or passive elements.

According to an embodiment, the matching circuit (not shown separately) may adjust the impedance of a transmission line (e.g., the first electrical path 1401 and/or the third electrical path 1403) or the impedance of an antenna radiator (e.g., the first conductive pattern 1330, the sixth conductive pattern 1347, or a combination of the first conductive pattern 1330 and the sixth conductive pattern 1347), so that the impedance of the transmission line and the impedance of the antenna radiator may be matched (e.g., impedance matching). When the impedance of the antenna radiator and the impedance of the transmission line are matched, the amount of reflection at the connection between the transmission line and the antenna radiator may be reduced, thereby enabling more efficient signal transmission through the antenna radiator.

According to various embodiments, the matching circuit (not shown separately) may shift the resonant frequency of at least one antenna radiator (e.g., the first conductive pattern 1330, the sixth conductive pattern 1347, or a combination of the first conductive pattern 1330 and the sixth conductive pattern 1347) to a specified frequency, or shift the same by a specified amount.

According to various embodiments, the matching circuit (not shown separately) may reduce deterioration of the antenna radiation performance due to the electromagnetic influence of the user's head (e.g., dielectric) in the wearing state of the tenth example wearable electronic device 13.

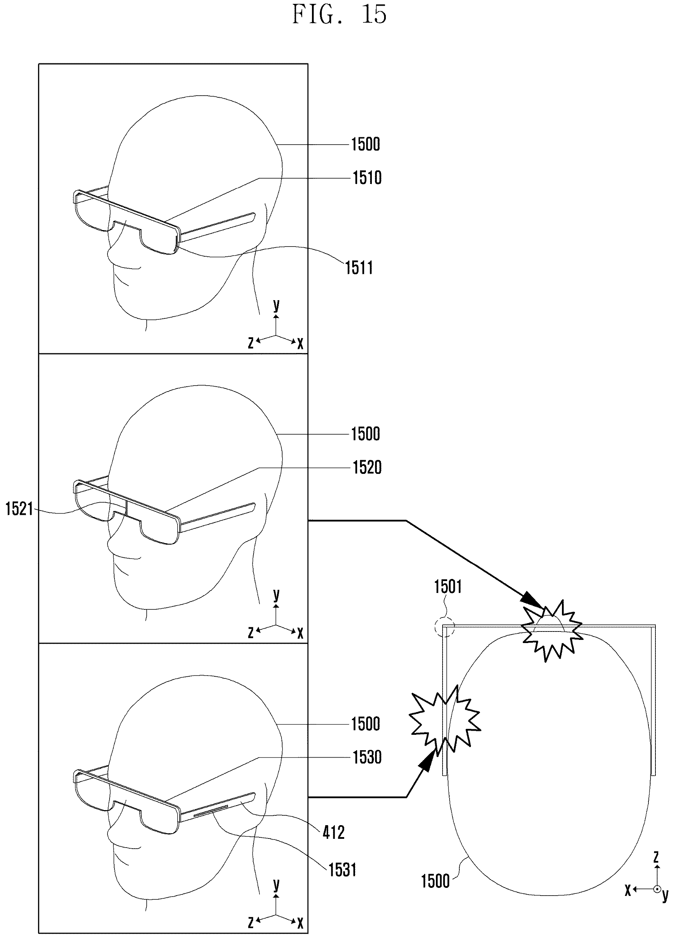

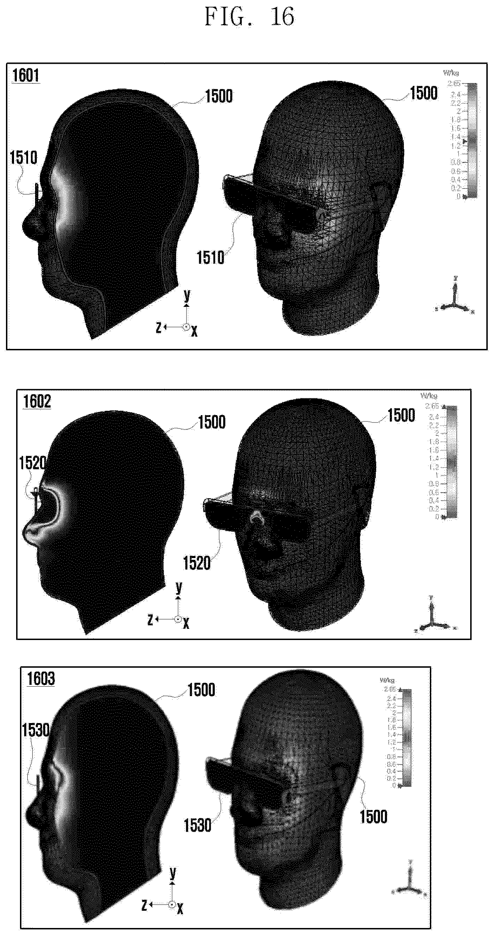

FIG. 15 is a diagram illustrating wearing states of several example wearable electronic devices according to various embodiments of the disclosure. FIG. 16 is a diagram illustrating heat maps representing SARs in wearing states of several example wearable electronic devices according to various embodiments of the disclosure.

Referring to FIGS. 4, 15, and 16, the fifth example wearable electronic device 4D may be implemented as a first type of wearable electronic device 1510, a second type of wearable electronic device 1520, or a third type of wearable electronic device 1530 depending on the position of the conductive pattern that operates as an antenna radiator.

According to an embodiment, the first type of wearable electronic device 1510 may include a first conductive pattern 1511 (e.g., the first conductive pattern 44 in FIG. 4).

According to an embodiment, the second type of wearable electronic device 1520 may include a third conductive pattern 1521 (e.g., the third conductive pattern 46 in FIG. 4).

According to an embodiment, the third type of wearable electronic device 1530 may include a fourth conductive pattern 1531 disposed or included in the second frame 412.

According to an embodiment, 1601 is a heat map 1601 representing an SAR in the wearing state of the first type of wearable electronic device 1510. 1602 is a heat map representing an SAR in the wearing state of the second type of wearable electronic device 1520. 1603 is a heat map representing an SAR in the wearing state of the third type of wearable electronic device 1530.

Comparing 1601, 1602, and 1603, in the wearing state, the first type of wearable electronic device 1510 may reduce the influence (e.g., the SAR) on the user, compared to the second type of wearable electronic device 1520 and the third type of wearable electronic device 1530. The first conductive pattern 44 included in the first type of wearable electronic device 1510 is positioned at a part 1501 that is further away from the user's head 1500, compared to the third conductive pattern 46 included in the second type of wearable electronic device 1520 and the fourth conductive pattern 1531 included in the third type of wearable electronic device 1530, so that the SAR may be further reduced when radiating electromagnetic waves.

According to an embodiment, when an electromagnetic wave is radiated through the first conductive pattern 44 in the wearing state of the first type of wearable electronic device 1510, an SAR value of about 1.3 W/kg may be measured. When an electromagnetic wave is radiated through the third conductive pattern 46 in the wearing state of the second type of wearable electronic device 1520, an SAR value of about 26.3 W/kg may be measured. When an electromagnetic wave is radiated through the fourth conductive pattern 1531 in the wearing state of the third type of wearable electronic device 1530, an SAR value of about 2.64 W/kg may be measured.

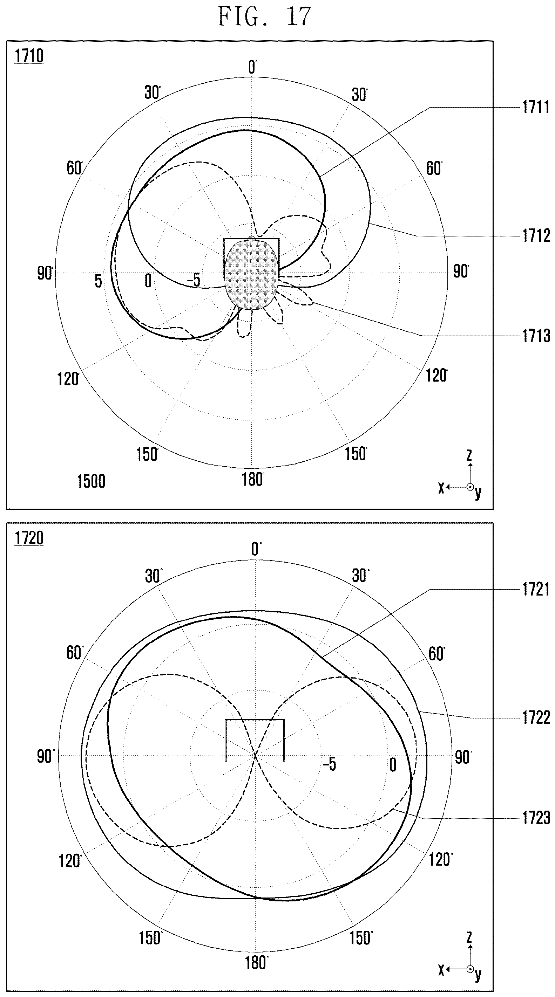

FIG. 17 is a diagram illustrating graphs 1710 representing radiation patterns in wearing states of several example wearable electronic devices and graphs 1720 representing radiation patterns in non-wearing states of several example wearable electronic devices according to various embodiments of the disclosure.

Referring to FIGS. 15 and 17, 1711 is a graph representing a radiation pattern of the first conductive pattern 44 in the wearing state of the first type of wearable electronic device 1510. 1712 is a graph representing a radiation pattern of the third conductive pattern 46 in the wearing state of the second type of wearable electronic device 1520. 1713 is a graph representing a radiation pattern of the fourth conductive pattern 1531 in the wearing state of the third type of wearable electronic device 1530.

According to an embodiment, 1721 is a graph representing a radiation pattern of the first conductive pattern 44 in a non-wearing state of the first type of wearable electronic device 1510. 1722 is a graph representing a radiation pattern of the third conductive pattern 46 in the non-wearing state of the second type of wearable electronic device 1520. 1723 is a graph representing a radiation pattern of the fourth conductive pattern 1531 in the non-wearing state of the third type of wearable electronic device 1530.

Comparing 1710 and 1720, the first type of wearable electronic device 1510 and the second type of wearable electronic device 1520 may provide (or form) radiation patterns with relatively enhanced directivity toward the front of the eyes (e.g., in the +z-axis direction), compared to the third type of wearable electronic device 1530.

Referring to FIGS. 16 and 17, the first type of wearable electronic device 1510 may reduce the SAR, compared to the second type of wearable electronic device 1520 and the third type of wearable electronic device 1530, while securing directivity toward the front of the eyes (e.g., in the +z-axis direction).

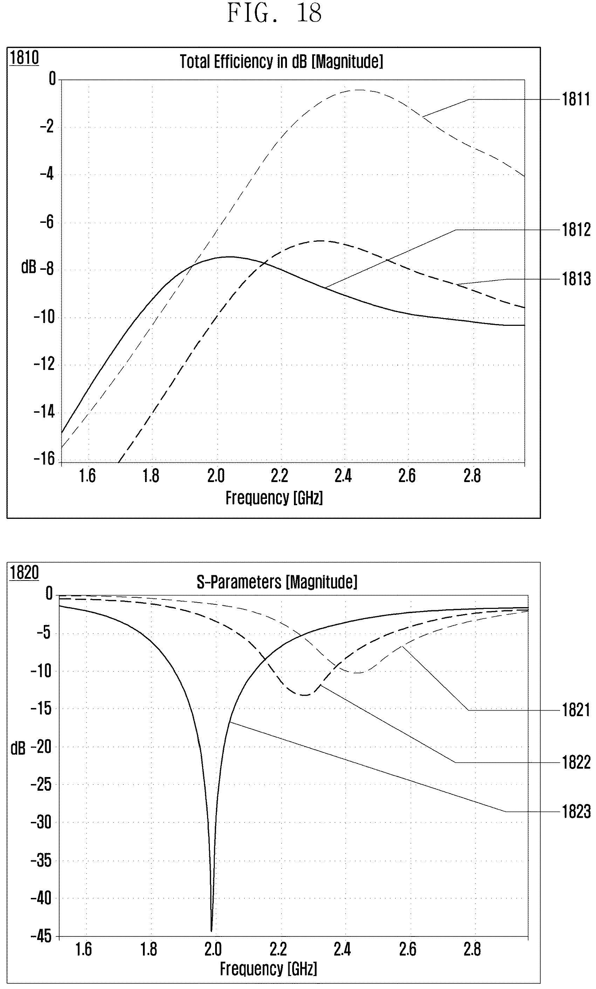

FIG. 18 is a diagram illustrating graphs 1810 representing antenna radiation performances for the first conductive pattern 44 (see FIG. 15) of the first type of wearable electronic device 1510 (see FIG. 15) and graphs 1820 representing resonance characteristics (e.g., S-parameters) for the second conductive pattern 46 (see FIG. 15) of the second type of wearable electronic device 1520 (see FIG. 15) according to various embodiments of the disclosure.

Referring to FIGS. 15 and 18, 1811 is a graph illustrating the antenna radiation performance of the first conductive pattern 44 of the first type of wearable electronic device 1510 in a non-wearing state. 1812 is a graph illustrating the antenna radiation performance of the first conductive pattern 44 of the first type of wearable electronic device 1510 in a first wearing state. 1813 is a graph illustrating the antenna radiation performance of the first conductive pattern 44 of the first type of wearable electronic device 1510 in a second wearing state. It may be difficult in practice to maintain a constant relative position between the first type of wearable electronic device 1510 and the user's head whenever the first type of wearable electronic device 1510 is worn on the user's head. The first wearing state and the second wearing state indicate states in which the first conductive pattern 44 is positioned with a wearing deviation of about ±2 mm in the x-axis direction or the y-axis direction from the user's head, respectively.

Comparing 1811, 1812, and 1813, the first wearing state and the second wearing state of the first type of wearable electronic device 1510 may have different resonance frequencies than the non-wearing state of the first type of wearable electronic device 1510 due to the electromagnetic influence of the user's head (e.g., dielectric) on the first conductive pattern 44 (see FIG. 15).

Comparing 1812 and 1813, the first wearing state and the second wearing state of the first type of wearable electronic device 1510 may have different resonance frequencies from each other due to the difference in relative positions between the user's head (e.g., dielectric) and the first conductive pattern 44.

According to an embodiment, 1821 is a graph illustrating the resonance characteristics of the third conductive pattern 46 of the second type of wearable electronic device 1520 in the non-wearing state. 1822 is a graph illustrating the resonance characteristics of the third conductive pattern 46 of the second type of wearable electronic device 1520 in a first wearing state. 1823 is a graph illustrating the resonance characteristics of the third conductive pattern 46 of the second type of wearable electronic device 1520 in a second wearing state. The first wearing state and the second wearing state indicate states in which the third conductive pattern 46 is positioned with a wearing deviation of about ±2 mm in the x-axis direction or the y-axis direction from the user's head, respectively.

Comparing 1821, 1822, and 1823, the first wearing state and the second wearing state of the second type of wearable electronic device 1520 may have different resonance frequencies than the non-wearing state of the second type of wearable electronic device 1520 due to the electromagnetic influence of the user's head (e.g., dielectric) on the third conductive pattern 46.

Comparing 1822 and 1823, the first wearing state and the second wearing state of the second type of wearable electronic device 1520 may have different resonance frequencies from each other due to the difference in the separation distance between the user's head (e.g., dielectric) and the third conductive pattern 46.

According to an embodiment, referring to 1812, 1813, 1822, and 1823, since the first distance at which the first conductive pattern 44 of the first type of wearable electronic device 1510 is spaced apart from the user's head is greater than the second distance at which the third conductive pattern 46 of the second type of wearable electronic device 1520 is spaced apart from the user's head, the first type of wearable electronic device 1510 may relatively reduce the amount of change in resonant frequency due to the wearing deviation, compared to the second type of wearable electronic device 1520.

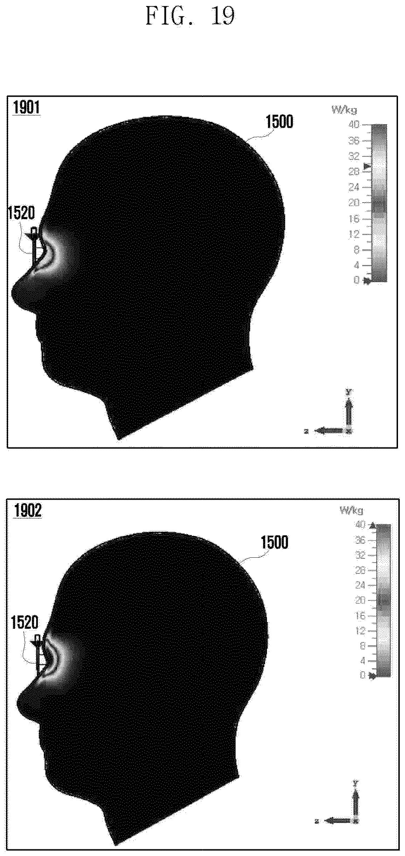

FIG. 19 is a diagram illustrating heat maps representing SARs in a wearing state of the second type of wearable electronic device 1520 (see FIG. 15) according to various embodiments of the disclosure.

Referring to FIGS. 15 and 19, 1901 is a heat map 1901 indicating an SAR in a first wearing state of the second type of wearable electronic device 1520. 1902 is a heat map 1902 indicating an SAR in a second wearing state of the second type of wearable electronic device 1520. The first wearing state and the second wearing state indicate states in which the third conductive pattern 46 is positioned with a wearing deviation of about ±2 mm in the x-axis direction or the y-axis direction from the user's head, respectively.

Referring to 1901 and 1902, the SAR may vary depending on the first wearing state and the second wearing state of the second type of wearable electronic device 1520.

According to an embodiment, since the first distance at which the first conductive pattern 44 of the first type of wearable electronic device 1510 (see FIG. 15) is spaced apart from the user's head is greater than the second distance at which the third conductive pattern 46 of the second type of wearable electronic device 1520 is spaced apart from the user's head, the first type of wearable electronic device 1510 may relatively reduce the amount of change in the SAR due to the wearing deviation, compared to the second type of wearable electronic device 1520.

FIG. 20 is a diagram illustrating perspective views of various example wearable electronic devices, and graphs representing radiation patterns and heat maps representing SARs in wearing states of various example wearable electronic devices according to various embodiments of the disclosure.

Referring to FIGS. 4 and 20, the fifth example wearable electronic device 4D may be implemented as a wearable electronic device 2010 of a first embodiment, a wearable electronic device 2020 of a second embodiment, a wearable electronic device 2030 of a third embodiment, or a wearable electronic device 2040 of a fourth embodiment depending on the position of the antenna radiator (e.g., the conductive pattern) and the position of the circuit assembly.

According to an embodiment, the wearable electronic device 2010 of the first embodiment, the wearable electronic device 2020 of the second embodiment, the wearable electronic device 2030 of the third embodiment, and/or the wearable electronic device 2040 of the fourth embodiment may include a first frame 2001 (e.g., the first frame 411D in FIG. 4), a second frame 2002 (e.g., the second frame 412 in FIG. 4), a third frame 2003 (e.g., the third frame 413 in FIG. 4), a transparent display 2004 (e.g., the transparent display 422 in FIG. 4), and/or a circuit assembly 2005 (e.g., the circuit assembly 47 in FIG. 4).

According to an embodiment, the wearable electronic device 2010 of the first embodiment may include a first conductive pattern 2011 (e.g., the first conductive pattern 44 in FIG. 4) disposed or included in a first part (e.g., the first part 4221 in FIG. 4) of the transparent display 2004. In the wearable electronic device 2010 of the first embodiment, the circuit assembly 2005 may be attachable to and detachable from the second frame 2002 so as to reduce a separation distance from the first conductive pattern 2011.

According to an embodiment, the wearable electronic device 2020 of the second embodiment may include a third conductive pattern 2021 (e.g., the third conductive pattern 46 in FIG. 4) disposed or included in a third part (e.g., the third part 4223 in FIG. 4) of the transparent display 2004. In the wearable electronic device 2010 of the second embodiment, the circuit assembly 2005 may be attachable to and detachable from the first frame 2001 so as to reduce the separation distance from the third conductive pattern 2021.

According to an embodiment, the wearable electronic device 2030 of the third embodiment may include a fourth conductive pattern 2031 disposed or included in the second frame 2002. In the wearable electronic device 2030 of the third embodiment, the circuit assembly 2005 may be attachable to and detachable from the second frame 2002 so as to reduce the separation distance from the fourth conductive pattern 2031.

According to an embodiment, the wearable electronic device 2040 of the fourth embodiment may include a fifth conductive pattern 2041 disposed or included in the first frame 2001. In the wearable electronic device 2040 of the fourth embodiment, the circuit assembly 2005 may be attachable to and detachable from the first frame 2001 so as to reduce the separation distance from the fifth conductive pattern 2041.

Comparing the radiation patterns illustrated in FIG. 20, the wearable electronic device 2010 of the first embodiment and the wearable electronic device 2020 of the second embodiment may provide (or form) radiation patterns with relatively improved directivity toward the front of the eyes (e.g., in the +z-axis direction), compared to the wearable electronic device 2030 of the third embodiment and the wearable electronic device 2040 of the fourth embodiment.

According to an embodiment, the wearable electronic device 2010 of the first embodiment may relatively reduce the SAR, compared to the wearable electronic device 2020 of the second embodiment, the wearable electronic device 2030 of the third embodiment, and the wearable electronic device 2040 of the fourth embodiment, while securing a directivity toward the front of the eyes (e.g., in the +z-axis direction).

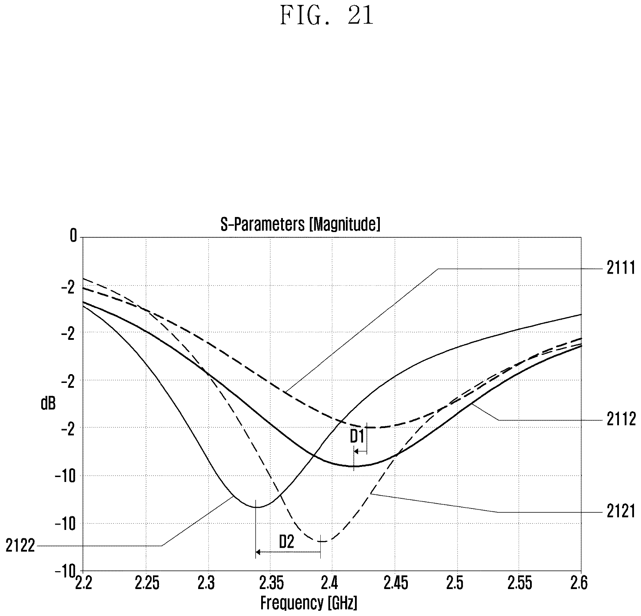

FIG. 21 illustrates graphs illustrating resonance characteristics (e.g., S-parameters) of the first example wearable electronic device 2010 (see FIG. 20) and the wearable electronic device 2030 of the third embodiment according to various embodiments of the disclosure.

Referring to FIGS. 20 and 21, in the first example wearable electronic device 2010 and the wearable electronic device 2040 of the third embodiment, the circuit assembly 2005 may be attached to and detached from the same position of the second frame 2002. The graphs in FIG. 21 represent resonance characteristics depending on the position where a battery (e.g., the battery 544 in FIG. 5) is disposed in the circuit assembly 2005.

Referring to FIGS. 20 and 21, 2111 is a graph representing resonance characteristics for the first conductive pattern 2011 when the battery (e.g., the battery 544 in FIG. 5) is disposed at a first position of the circuit assembly 2005 in the first example wearable electronic device 2010. 2112 is a graph representing resonance characteristics for the first conductive pattern 2011 when the battery is disposed at a second position of the circuit assembly 2005 in the first example wearable electronic device 2010. When the battery is disposed at the first position, the relative positions (or relative positional relationships) between the battery and the components (e.g., any component included in the circuit assembly 2005 or any component around the circuit assembly 2005 in the first example wearable electronic device 2010) around the battery may be different from the relative positions between the battery and the components around the battery when the battery is disposed at the second position.

According to an embodiment, 2121 is a graph illustrating resonance characteristics of the fourth conductive pattern 2031 when the battery (e.g., the battery 544 in FIG. 5) is disposed at the first position of the circuit assembly 2005 in the third example wearable electronic device 2030. 2122 is a graph illustrating resonance characteristics of the fourth conductive pattern 2031 when the battery is disposed at the second position of the circuit assembly 2005 in the third example wearable electronic device 2030. When the battery is disposed at the first position, the relative positions (or relative positional relationships) between the battery and components (e.g., any component included in the circuit assembly 2005 or any component around the circuit assembly 2005 in the third example wearable electronic device 2030) around the battery may be different from the relative positions between the battery and the components around the battery when the battery is disposed at the second position.

Comparing D1 and D2, the third conductive pattern 2031 is disposed or included in the second frame 2002 to which the circuit assembly 2005 is attached, whereas the first conductive pattern 2011 is disposed or included in the transparent display 2004 rather than the second frame 2002 to which the circuit assembly 2005 is attached, so the first example wearable electronic device 2010 may relatively reduce the amount of change in resonant frequency (or the amount of change in antenna radiation performance) depending on the change in the position of the battery (e.g., the battery 544 in FIG. 5), compared to the third example wearable electronic device 2030.

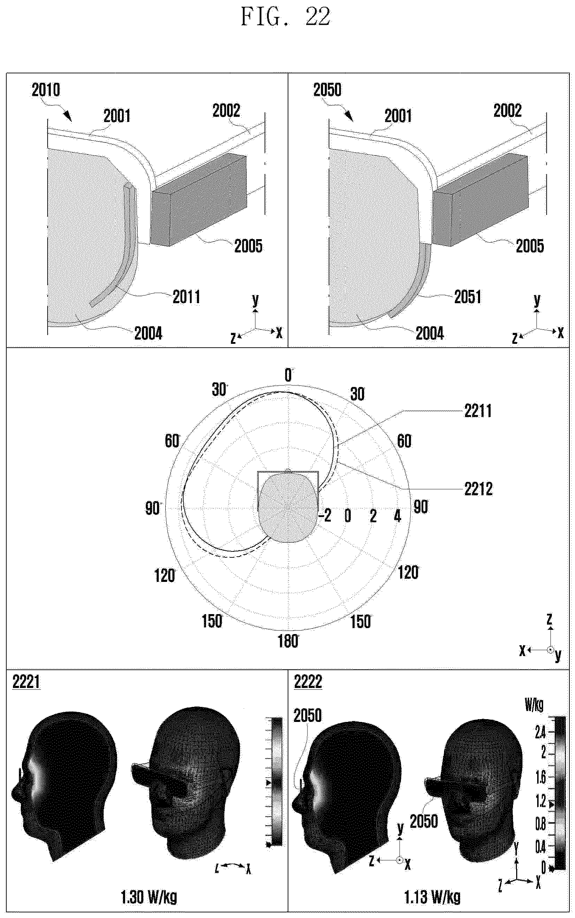

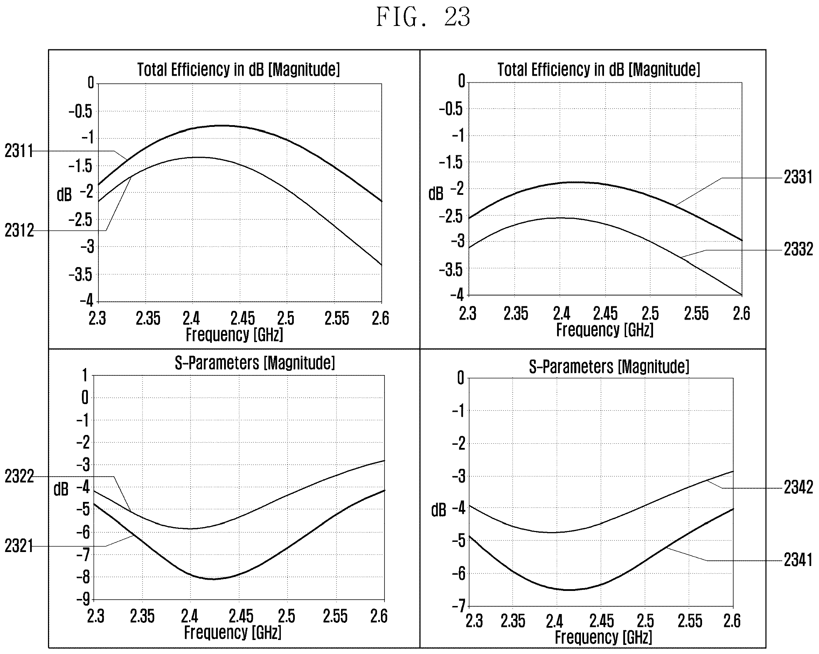

FIG. 22 is a diagram illustrating a perspective view of a first example wearable electronic device 2010, a perspective view of a fifth example wearable electronic device 2050, and graphs representing radiation characteristics of the first example wearable electronic device 2010 and the fifth example wearable electronic device 2050 and heat maps representing SARs in wearing states according to various embodiments of the disclosure. FIG. 23 is a diagram illustrating graphs representing antenna radiation performances and graphs representing resonance characteristics (e.g., S-parameters) for the first example wearable electronic device 2010 and the fifth example wearable electronic device 2050 according to various embodiments of the disclosure.

Referring to FIG. 22, the first example wearable electronic device 2010 and/or the fifth example wearable electronic device 2050 may include a first frame 2001, a second frame 2002, a transparent display 2004, and/or a circuit assembly 2005.

According to an embodiment, the first example wearable electronic device 2010 may include a first conductive pattern 2011 disposed or included in the transparent display 2004 and configured to radiate electromagnetic waves. For example, when viewed from above the second surface (e.g., the second surface 22B in FIG. 2) of the transparent display 2004, the first conductive pattern 2011 may be disposed or included in the transparent display 2004 to be spaced apart from the edge of the transparent display 2004.

According to an embodiment, the fifth example wearable electronic device 2050 may include a seventh conductive pattern 2051 disposed on the edge of the transparent display 2004 and configured to radiate electromagnetic waves. According to various embodiments, the combination of the seventh conductive pattern 2051 and the first frame 2001 may form (or provide) at least a portion of a bezel for the transparent display 2004.

According to an embodiment, 2221 is a graph representing a radiation pattern of the first conductive pattern 2011 in the wearing state of the first example wearable electronic device 2010. 2222 is a graph representing a radiation pattern of the seventh conductive pattern 2051 in the wearing state of the second example wearable electronic device 2050. The first example wearable electronic device 2010 and the fifth example wearable electronic device 2050 may secure a directivity toward the front of the eyes (e.g., in the +z-axis direction).

According to an embodiment, 2221 is a heat map representing the SAR in the wearing state of the first example wearable electronic device 2010. 2222 is a heat map representing the SAR in the wearing state of the fifth example wearable electronic device 2050. In the wearing state, the fifth example wearable electronic device 2050 may reduce the SAR compared to the first example wearable electronic device 2010. For example, when an electromagnetic wave is radiated through the first conductive pattern 2011 in the wearing state of the first example wearable electronic device 2010, an SAR value of about 1.30 W/kg may be measured. For example, when an electromagnetic wave is radiated through the seventh conductive pattern 2051 in the wearing state of the fifth example wearable electronic device 2050, an SAR value of about 1.13 W/kg may be measured.

Referring to FIG. 23, 2311 is a graph illustrating antenna radiation performance of the first conductive pattern 2011 in the non-wearing state of the first example wearable electronic device 2010. 2312 is a graph illustrating antenna radiation performance of the seventh conductive pattern 2051 in the non-wearing state of the fifth example wearable electronic device 2010.

According to an embodiment, 2321 is a graph illustrating resonance characteristics of the first conductive pattern 2011 in the non-wearing state of the first example wearable electronic device 2010. 2322 is a graph illustrating resonance characteristics of the seventh conductive pattern 2051 in the non-wearing state of the fifth example wearable electronic device 2050.

According to an embodiment, 2331 is a graph illustrating antenna radiation performance of the first conductive pattern 2011 in the wearing state of the first example wearable electronic device 2010. 2332 is a graph illustrating antenna radiation performance of the seventh conductive pattern 2051 in the wearing state of the fifth example wearable electronic device 2050.

According to an embodiment, 2341 is a graph illustrating resonance characteristics of the first conductive pattern 2011 in the wearing state of the first example wearable electronic device 2010. 2342 is a graph illustrating resonance characteristics of the seventh conductive pattern 2051 in the wearing state of the fifth example wearable electronic device 2050.

According to an embodiment, the first example wearable electronic device 2010 and the fifth example wearable electronic device 2050 may secure antenna radiation performance for a usage frequency (e.g., about 2.4 GHz) in the non-wearing state and wearing state.

According to an embodiment, the first example wearable electronic device 2010 may improve antenna radiation performance for a usage frequency (e.g., about 2.4 GHz), compared to the fifth example wearable electronic device 2050, in the non-wearing state and wearing state.

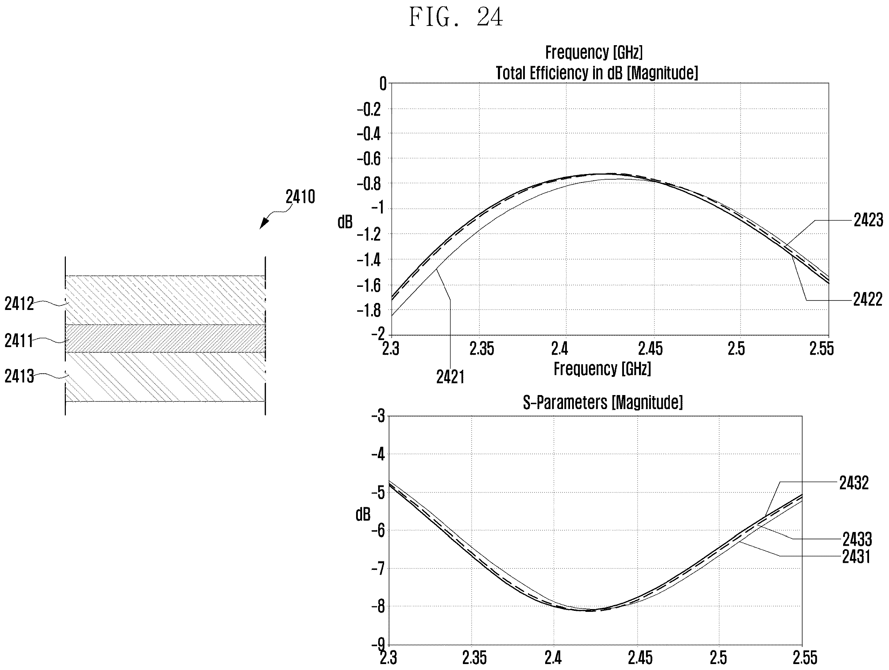

FIG. 24 is a diagram illustrating a cross-sectional view of a transparent display 2410, and graphs representing antenna radiation performances and graphs representing resonance characteristics (e.g., S-parameters) for an antenna radiator disposed or included in the transparent display 2410 according to various embodiments of the disclosure.

Referring to FIG. 24, the transparent display 2410 may include the first transparent display 22 or the second transparent display 23 in FIG. 2, the first transparent display 421 or the second transparent display 422 in FIG. 4, or the transparent display 422 in FIG. 4.

According to an embodiment, the transparent display 2410 may include a substrate 2411, a first coating layer 2412, and/or a second coating layer 2413.

According to an embodiment, the substrate 2411 may be a basis of a transparent screen configured to display virtual images in augmented reality, virtual reality, or mixed reality. The substrate 2411 may include, for example, a transparent display panel for a see-through type of transparent display. The substrate 2411 may include, for example, a projection type of transparent plate for a projection-type transparent display.

According to an embodiment, the first coating layer 2412 may be disposed on one side of the substrate 2411, and the second coating layer 2413 may be disposed (or positioned) on the other side of the substrate 2411. The substrate 2411 may be disposed (or positioned) between the first coating layer 2412 and the second coating layer 2413. In a wearing state of a wearable electronic device including the transparent display 2410, the first coating layer 2412 may face the user's eyes.

According to an embodiment, the first coating layer 2412 and/or the second coating layer 2413 may make an image (e.g., an actual image and/or a virtual image) appear clearly through the substrate 2411. By reducing the difference in refractive index between two media, the reflectivity of the interface between the two media may be reduced, thereby reducing reflection at the interface and loss of light according thereto. The first coating layer 2412 may be interpreted as being disposed between the substrate 2411 and air. The second coating layer 2413 may be interpreted as being disposed between the substrate 2411 and air. The first coating layer 2412 disposed between the substrate 2411 and air may serve to reduce the difference in refractive index between the media of the substrate 2411 and air, thereby improving the clarity of the image. The second coating layer 2413 disposed between the substrate 2411 and the air may serve to reduce the difference in refractive index between the media of the substrate 2411 and the air, thereby improving the clarity of the image.

According to an embodiment, the first coating layer 2412 may be a first antireflection layer, and the second coating layer 2413 may be a second anti-radiation layer.

According to an embodiment, the first coating layer 2412 and/or the second coating layer 2413 may be formed of silicon carbonate or polycarbonate. The first coating layer 2412 and/or the second coating layer 2413 may include various materials, in addition to those mentioned above.

According to an embodiment, the transparent display 2410 may have a thickness of about 2.0 mm. The thickness of the transparent display 2410 may vary.

According to an embodiment, the first coating layer 2412 may have a thickness of about 0.0004 mm. The thickness of the first coating layer 2412 may vary.

According to an embodiment, the second coating layer 2413 may have a thickness of about 0.0004 mm. The thickness of the second coating layer 2413 may vary.

According to an embodiment, the conductive pattern (e.g., the first conductive pattern 44 and/or the third conductive pattern 46 in FIG. 4) may be disposed or included in the transparent display 2410 and may operate as an antenna radiator that radiates electromagnetic waves.

According to an embodiment, 2421 is a graph illustrating antenna radiation performance for a conductive pattern disposed or included in the transparent display 2410 in a case where the first coating layer 2412 and the second coating layer 2413 are omitted. 2422 is a graph illustrating antenna radiation performance for a conductive pattern disposed or included in the transparent display 2410 in a case where the first coating layer 2412 and the second coating layer 2413 are formed of silicon carbonate. 2423 is a graph illustrating antenna radiation performance for a conductive pattern disposed or included in the transparent display 2410 in a case where the first coating layer 2412 and the second coating layer 2413 are formed of polycarbonate.

According to an embodiment, 2421, 2422, and 2423 show that antenna radiation performance for a conductive pattern disposed or included in the transparent display 2410 may be secured even if the materials included in the first coating layer 2412 and the second coating layer 2413 are different.

According to an embodiment, 2431 is a graph illustrating resonance characteristics for a conductive pattern disposed or included in the transparent display 2410 in a case where the first coating layer 2412 and the second coating layer 2413 are omitted. 2432 is a graph illustrating resonance characteristics for a conductive pattern disposed or included in the transparent display 2410 in a case where the first coating layer 2412 and the second coating layer 2413 are formed of silicon carbonate. 2423 is a graph illustrating resonance characteristics of a conductive pattern disposed or included in the transparent display 2410 in a case where the first coating layer 2412 and the second coating layer 2413 are formed of polycarbonate.

According to an embodiment, 2431, 2432, and 2433 show that resonance characteristics of the conductive pattern disposed or included in the transparent display 2410 may be secured even if the materials included in the first coating layer 2412 and the second coating layer 2413 are different.

According to an example embodiment of the disclosure, a wearable electronic device (e.g., the first example wearable electronic device 2) includes a frame 21, a transparent display (e.g., the first transparent display 22 and the second transparent display 23), a first conductive pattern 24, and a circuit assembly 3. The frame 21 is mounted on a user's head. The transparent display is disposed (or positioned) on the frame so as to face the user's eyes when the frame 21 is mounted on the user's head. The first conductive pattern 24 is disposed (or positioned) at least partially on the frame 21 or the transparent display (e.g., the first transparent display 22 and the second transparent display 23). The circuit assembly 3 is attachable to and detachable from the frame 21. In a case where the circuit assembly 3 is attached to the frame 21, the first conductive pattern 24 is electrically connected to a wireless communication circuit 545 included in the circuit assembly 3.

According to an example embodiment of the disclosure, the circuit assembly 3 may include a housing 31, and a board assembly 542 accommodated in the housing 31 and having the wireless communication circuit 545 disposed therein. In a case where the circuit assembly 3 is attached to the frame 21, the first conductive pattern 24 may be electrically connected to a ground 546 included in the board assembly 542.

According to an example embodiment of the disclosure, the circuit assembly 3 may further include a processor 120, a memory 130, or a battery 544 electrically connected to the wireless communication circuit 545.

According to an example embodiment of the disclosure, the circuit assembly 3 may further include a second conductive pattern (e.g., the conductive pattern 1347). The wireless communication circuit 545 may be configured to transmit and/or receive a signal in a selected or designated frequency band through the first conductive pattern 1330, the second conductive pattern (e.g., the conductive pattern 1347 in FIG. 6), or a combination of the first conductive pattern 1330 and the second conductive pattern (e.g., the conductive pattern 1347 in FIG. 6).

According to an example embodiment of the disclosure, the frame 21 may include a first frame 211 in which the transparent display (e.g., the first transparent display 22 and the second transparent display 23) is disposed, a second frame 212 connected to the first frame 211 via a first hinge 214 and adapted to rest on the user's left ear, and a third frame 213 connected to the first frame 211 via a second hinge 215 and adapted to rest on the user's right ear. The circuit assembly 3 may be attachable to and detachable from the first frame 211, the second frame 212, or the third frame 213.

According to an example embodiment of the disclosure, the frame 21 may include a first frame 511 in which the transparent display 52 is disposed, and a second frame 512 connected to the first frame 511 via a hinge (e.g., the first hinge 214). The circuit assembly 54 may be attachable to and detachable from the second frame 512. In an unfolded state of a combination of the first frame 511 and the second frame 512, a first connector 711 included in the circuit assembly 3 and a second connector (e.g., the third connector 713) disposed in the first frame 511 may be electrically connected. The first conductive pattern 53 and the wireless communication circuit 545 may be electrically connected through the conduction of the first connector 711 and the second connector (e.g., the third connector 713). In a folded state of the combination of the first frame 511 and the second frame 512, the first connector 711 and the second connector (e.g., the third connector 713) may be electrically separated.

According to an example embodiment of the disclosure, the circuit assembly 1040 may be attachable to and detachable from the frame 1012 through snap fitting.

According to an example embodiment of the disclosure, the circuit assembly 3 may be inserted into a recess 2122 of the frame 21.

According to an example embodiment of the disclosure, the transparent display (e.g., the first transparent display 22 and the second transparent display 23) may include a see-through type of transparent display including a plurality of pixels.

According to an example embodiment of the disclosure, the transparent display (e.g., the first transparent display 22 and the second transparent display 23) may include a projection type of transparent display. The wearable electronic device may further include at least one light source (not shown separately) configured to project light onto the transparent display (e.g., the first transparent display 22 and the second transparent display 23).

According to an example embodiment of the disclosure, the transparent display 422 may be an integrated or single transparent display including a first part 4221 corresponding to the user's left eye, a second part 4222 corresponding to the user's right eye, and a third part 4223 connecting the first part 4221 and the second part 4222.

According to an example embodiment of the disclosure, the transparent display (e.g., the first transparent display 22) may include a first surface 22A facing the user's eyes and a second surface 22B facing in a direction opposite to the first surface 22A. When viewed from above the second surface 22B, the first conductive pattern 24 may be spaced apart from an edge of the transparent display (e.g., the first transparent display 22) and disposed or included in the transparent display (e.g., the first transparent display 22).

According to an example embodiment of the disclosure, the first conductive pattern 2221 may be disposed (or positioned) on an edge of the transparent display (e.g., the first transparent display 22).

According to an example embodiment of the disclosure, the first conductive pattern 24 may be embedded in the transparent display (e.g., the first transparent display 22).

According to an example embodiment of the disclosure, the wearable electronic device may be configured to perform augmented reality through the transparent display (e.g., the first transparent display 22 and the second transparent display 23), based at least in part on data received by the wireless communication circuit 545 from the outside of the wearable electronic device through the first conductive pattern 1330.

The embodiments disclosed in the disclosure and the drawings merely represent specific examples to more easily explain the technical concept and to help understand the disclosure, and are not intended to limit the scope of the disclosure. Accordingly, the scope of the various embodiments of the disclosure should be interpreted as encompassing modifications or changes derived from the disclosure, as well as the embodiments disclosed herein. Additionally, it will be understood that any embodiment(s) described herein may be used in conjunction with any other embodiment(s) described herein.

## Claims

1. A wearable electronic device (2) comprising:
a frame (21) mounted on a user's head;
a transparent display (22 or 23) disposed on the frame (21) so as to face user's eyes when the frame (21) has been mounted on the user's head;
a first conductive pattern (24) disposed at least partially on the frame (21) or the transparent display (22 or 23); and
a circuit assembly (3) attachable to and detachable from the frame (21),
wherein, in a case where the circuit assembly (3) is attached to the frame (21), the first conductive pattern (24) is electrically connected to a wireless communication circuit (545) included in the circuit assembly (3).

2. The wearable electronic device of claim 1,
wherein the circuit assembly (3) comprises a housing (31), and a board assembly (542) accommodated in the housing (31) and having the wireless communication circuit (545) disposed therein, and
wherein, in a case where the circuit assembly (3) is attached to the frame (21), the first conductive pattern (24) is electrically connected to a ground (546) included in the board assembly (542).

3. The wearable electronic device of claim 1 or 2,
wherein the circuit assembly (3) further comprises a processor (120), a memory (130), or a battery (544) electrically connected to the wireless communication circuit (545).

4. The wearable electronic device of any one of claims 1 to 3,
wherein the circuit assembly (3) further comprises a second conductive pattern (1347), and
wherein the wireless communication circuit (545) is configured to transmit and/or receive a signal in a selected or designated frequency band through the first conductive pattern (1330), the second conductive pattern (1347), or a combination of the first conductive pattern (1330) and the second conductive pattern (1347).

5. The wearable electronic device of any one of claims 1 to 4,
wherein the frame (21) comprises a first frame (211) in which the transparent display (22 or 23) is disposed, a second frame (212) connected to the first frame (211) via a first hinge (214) and adapted to rest on the user's left ear, and a third frame (213) connected to the first frame (211) via a second hinge (215) and adapted to rest on the user's right ear, and
wherein the circuit assembly (3) is attachable to and detachable from the first frame (211), the second frame (212), or the third frame (213).

6. The wearable electronic device of any one of claims 1 to 4,
wherein the frame (21) comprises a first frame (511) in which the transparent display (52) is disposed, and a second frame (512) connected to the first frame (511) via a hinge (214),
wherein the circuit assembly (54) is attachable to and detachable from the second frame (512),
wherein, in an unfolded state of a combination of the first frame (511) and the second frame (512), a first connector (711) included in the circuit assembly (3) and a second connector (713) disposed in the first frame (511) are electrically connected, and the first conductive pattern (53) and the wireless communication circuit (545) are electrically connected through the conduction of the first connector (711) and the second connector (713), and
wherein, in a folded state of the combination of the first frame (511) and the second frame (512), the first connector (711) and the second connector (713) are electrically separated.

7. The wearable electronic device of any one of claims 1 to 6,
wherein the circuit assembly (1040) is attachable to and detachable from the frame (1012) through snap fitting.

8. The wearable electronic device of any one of claims 1 to 7,
wherein the circuit assembly (3) is inserted into a recess (2122) of the frame (21).

9. The wearable electronic device of any one of claims 1 to 8,
wherein the transparent display (22 or 23) comprises a see-through type of transparent display comprising a plurality of pixels.

10. The wearable electronic device of any one of claims 1 to 8,
wherein the transparent display (22 or 23) comprises a projection type of transparent display,
wherein the wearable electronic device further comprises at least one light source configured to project light onto the transparent display (22 or 23).

11. The wearable electronic device of any one of claims 1 to 10,
wherein the transparent display (422) is an integrated or single transparent display comprising a first part (4221) corresponding to the user's left eye, a second part (4222) corresponding to the user's right eye, and a third part (4223) connecting the first part (4221) and the second part (4222).

12. The wearable electronic device of any one of claims 1 to 11,
wherein the transparent display (22) comprises a first surface (22A) facing the user's eyes and a second surface (22B) facing in a direction opposite to the first surface (22A), and
wherein, when viewed from above the second surface (22B), the first conductive pattern (24) is spaced apart from an edge of the transparent display (22) and disposed or included in the transparent display (22).

13. The wearable electronic device of any one of claims 1 to 11,
wherein the first conductive pattern (2221) is disposed on an edge of the transparent display (22).

14. The wearable electronic device of any one of claims 1 to 11,
wherein the first conductive pattern (24) is embedded in the transparent display (22).

15. The wearable electronic device of any one of claims 1 to 14,
configured to perform augmented reality (AR) through the transparent display (22 or 23), based at least in part on data received by the wireless communication circuit (545) from the outside of the wearable electronic device through the first conductive pattern (1330).
